# EUROPÄISCHE PATENTSCHRIFT

(11) **EP 3 658 458 B1**
(45) Veröffentlichungstag und Bekanntmachung des Hinweises auf die Patenterteilung: **18.05.2022**
(21) Anmeldenummer: 18749324.2
(22) Anmeldetag: 26.07.2018
(51) Int. Cl.: B64D 11/06, B60N 2/42, B60N 2/427

(54) **FLUGZEUGSITZVORRICHTUNG**
AIRCRAFT SEAT DEVICE
DISPOSITIF SIÈGE D'AVION

(30) Priorität: 28.07.2017 DE 102017117175
(43) Veröffentlichungstag der Anmeldung: 03.06.2020
(73) Patentinhaber: Recaro Aircraft Seating GmbH & Co. KG, 74523 Schwäbisch Hall (DE)
(72) Erfinder: WIELAND, Klaus, 74523 Schwäbisch Hall-Bibersfeld (DE); HILLE-ZAPPOLD, Volker, 74076 Heilbronn (DE); SPELSBERG-KORSPETER, Gottfried, 74523 Schwäbisch Hall (DE); GÄNGER, Tim, 71364 Winnenden (DE); JAEGER, Gunther, 74429 Sulzbach-Laufen (DE)
(74) Vertreter: Daub, Thomas
(86) Internationale Anmeldenummer: PCT/EP2018/070290
(87) Internationale Veröffentlichungsnummer: WO 2019/020746

(56) Entgegenhaltungen:
- WO-A1-2016/001374
- GB-A- 2 316 864
- US-A- 5 454 622
- US-A1- 2002 079 734
- US-A1- 2010 052 378
- US-A1- 2011 140 488

## Beschreibung

### Stand der Technik

Die Erfindung betrifft eine Flugzeugsitzvorrichtung nach dem Oberbegriff des Patentanspruchs 1.

Aus der Druckschrift WO 2016/001374 A1 ist bereits eine Flugzeugsitzvorrichtung mit zumindest einer Rückenlehne bekannt, mit zumindest einem mit der Rückenlehne gekoppelten Sitzbauteil und mit einer Rückenlehnenaufschlagssicherungsvorrichtung, die in zumindest einem Normalbetriebszustand dazu vorgesehen ist, die Rückenlehne und das Sitzbauteil in einer Verriegelstellung starr zu verbinden, und die in zumindest einem weiteren Betriebszustand durch eine zumindest teilweise Entkopplung der Rückenlehne von dem Sitzbauteil dazu vorgesehen ist, Aufschlagskräfte auf die Rückenlehne zumindest in einem Crashfall zumindest teilweise zu reduzieren, wobei die Rückenlehne dazu vorgesehen ist, nach der teilweisen Entkopplung wieder in einer Verriegelstellung verriegelt zu werden. In der Druckschrift WO 2016/001374 A1 weist die Rückenlehnenaufschlagssicherungsvorrichtung dazu ein Verriegelmodul auf, das mittels eines als Formschlusselement ausgebildeten Halteelements in einer Verriegelstellung gehalten wird, das durch ein Trägheitselement, das durch eine während eines Crashfalls wirkende Beschleunigung axial verschoben wird, ausgelenkt wird und so eine formschlüssige Verriegelung der Rückenlehnenaufschlagssicherungsvorrichtung auflöst. Das Trägheitselement wird in einem Normalbetriebszustand über ein Federelement in eine Neutralstellung gedrückt und während eines Crashfalls gegen diese Federkraft ausgelenkt. Diese Rückenlehnenaufschlagssicherungsvorrichtung hat den Nachteil, dass sie bewegliche Teile aufweist und komplex ist. Dadurch lässt sich die Rückenlehnenaufschlagssicherungsvorrichtung nicht optimal auslegen und ist nicht funktionssicher.

Die Druckschrift US 2011/140488 A1 zeigt eine Flugzeugsitzvorrichtung mit zumindest einer Rückenlehne, mit zumindest einem mit der Rückenlehne gekoppelten Sitzbauteil und mit einer Rückenlehnenaufschlagssicherungsvorrichtung, die durch eine teilweise Entkopplung der Rückenlehne von dem Sitzbauteil dazu vorgesehen ist.

Die Druckschrift GB 2 316 864 A zeigt eine Fahrzeugsitzvorrichtung mit zumindest einer Rückenlehne, mit zumindest einem mit der Rückenlehne gekoppelten Sitzbauteil und mit einer Rückenlehnenaufschlagssicherungsvorrichtung, die durch eine teilweise Entkopplung der Rückenlehne von dem Sitzbauteil dazu vorgesehen ist.

Die Druckschrift US 2002/079734 A1 zeigt eine Fahrzeugsitzvorrichtung mit zumindest einer Rückenlehne, mit zumindest einem mit der Rückenlehne gekoppelten Sitzbauteil und mit einer Gurtvorrichtung.

Die Druckschrift US 2010/052378 A1 zeigt eine Fahrzeugsitzvorrichtung mit zumindest einer Rückenlehne, mit zumindest einem mit der Rückenlehne gekoppelten Sitzbauteil und mit einer Rückenlehnenaufschlagssicherungsvorrichtung, die durch eine teilweise Entkopplung der Rückenlehne von dem Sitzbauteil dazu vorgesehen ist.

Die Druckschrift US 5 454 622 A zeigt eine Flugzeugsitzvorrichtung mit zumindest einer Rückenlehne, mit zumindest einem mit der Rückenlehne gekoppelten Sitzbauteil und mit einer Rückenlehnenaufschlagssicherungsvorrichtung, die durch eine teilweise Entkopplung der Rückenlehne von dem Sitzbauteil dazu vorgesehen ist.

Die Aufgabe der Erfindung besteht insbesondere darin, eine gattungsgemäße Vorrichtung mit verbesserten Eigenschaften hinsichtlich einer Funktionssicherheit bereitzustellen, die insbesondere kostengünstig und einfach ist. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzvorrichtung mit zumindest einer Rückenlehne, mit zumindest einem mit der Rückenlehne gekoppelten Sitzbauteil und mit einer Rückenlehnenaufschlagssicherungsvorrichtung, die durch eine teilweise Entkopplung der Rückenlehne von dem Sitzbauteil dazu vorgesehen ist, Aufschlagskräfte auf die Rückenlehne zumindest in einem Crashfall zumindest teilweise zu reduzieren, und die dazu wenigstens eine Halteeinheit umfasst, die die Rückenlehnenaufschlagssicherungsvorrichtung in einem Normalbetriebszustand verriegelt.

Gemäß der Erfindung ist die Halteeinheit als ein Blattfederelement ausgebildet, das wenigstens einen Federschenkel aufweist, wobei die Halteeinheit in einem Auslösefall zur Entkopplung zunächst dazu vorgesehen ist, elastisch verformt zu werden. Unter einer "Flugzeugsitzvorrichtung" soll dabei insbesondere eine Vorrichtung verstanden werden, die zumindest einen Teil eines Flugzeugsitzes oder einen gesamten Flugzeugsitz ausbildet. Unter einem "Flugzeugsitz" soll dabei insbesondere ein Sitz verstanden werden, der dazu vorgesehen ist, in einer Flugzeugkabine eines Flugzeugs auf einem Kabinenboden aufgeständert zu werden, und auf dem ein Passagier während eines Flugs sitzen kann. Dabei weist der Flugzeugsitz zumindest einen Sitzboden und eine mit dem Sitzboden gekoppelte Rückenlehne auf, wobei die Rückenlehne vorzugsweise verschwenkbar mit dem Sitzboden verbunden ist, wodurch der Flugzeugsitz vorzugsweise in unterschiedliche Funktionsstellungen bewegbar ist. Unter einer "Rückenlehne" soll dabei insbesondere ein Bauteil eines Flugzeugsitzes verstanden werden, an dem eine auf dem Flugzeugsitz sitzende Person ihren Rücken abstützen kann. Unter einem "Sitzbauteil" soll dabei insbesondere ein Bauteil eines Flugzeugsitzes verstanden werden, wie insbesondere ein Sitzgestell oder ein Teil einer festen Struktur des Flugzeugsitzes, wie ein Querrohr. Grundsätzlich ist es auch denkbar, dass das Sitzbauteil als ein anderes, dem Fachmann als sinnvoll erscheinendes Bauteil, insbesondere als ein tragendes Bauteil eines Flugzeugsitzes, ausgebildet ist. Unter "gekoppelt" soll dabei insbesondere miteinander verbunden verstanden werden. Dabei ist es denkbar, dass zwei Elemente, die miteinander gekoppelt sind, direkt oder indirekt über wenigstens ein weiteres Element miteinander verbunden sind. Unter einer "teilweisen Entkopplung" soll dabei insbesondere verstanden werden, dass eine Bewegung der

Rückenlehne und eine Bewegung des Sitzbauteils zumindest für eine definierte Zeit und/oder über eine definierte Verfahrstrecke voneinander getrennt werden, sodass sich die Rückenlehne über eine definierte Zeit und/oder über eine definierte Verfahrstrecke zu dem Sitzbauteil bewegen kann. Unter "Aufschlagskräften" sollen dabei Kräfte verstanden werden, die von Objekten, wie insbesondere von einem Körper eines auf dem Flugzeugsitz sitzenden Passagiers, bei Auftreffen auf ein Element, wie insbesondere die Rückenlehne, entstehen. Unter einem "Crashfall" soll dabei insbesondere ein Überlastfall verstanden werden, also ein Betriebszustand, in dem Kräfte auf die Flugzeugsitzvorrichtung und/oder den Flugzeugsitz, dessen Teil die Flugzeugsitzaufständervorrichtung ist, wirken, die größer sind als Kräfte, die durch eine normale Belastung bei einem normalen Flugbetrieb entstehen. Unter einem "Normalbetriebszustand" soll dabei insbesondere ein Betriebszustand während eines normalen Betriebs der Flugzeugsitzvorrichtung verstanden werden, insbesondere während eines in einem Flugzeug eingebauten Zustands und während eines Betriebs des Flugzeugs. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter "verriegelt" soll dabei in diesem Zusammenhang insbesondere verstanden werden, dass Kräfte über die Rückenlehnenaufschlagssicherungsvorrichtung übertragen werden können, insbesondere von der Rückenlehne in das Sitzbauteil und umgekehrt. Unter einer "Halteeinheit" soll dabei insbesondere eine Einheit verstanden werden, die in einer Verriegelstellung dazu vorgesehen ist, eine Haltekraft auf ein zu haltendes Element auszuüben und dabei vorzugsweise direkt in einem Kontakt mit dem zu haltenden Element steht. Insbesondere ist unter einer Halteeinheit nicht eine Einheit zu verstehen, die dazu vorgesehen ist, eine Haltekraft auf ein Form- und/oder Kraftschlusselement auszuüben, um dieses in einem Normalbetriebszustand in einer Verriegelstellung zu halten. Unter einem "Auslösefall" soll dabei insbesondere ein Fall verstanden werden, in dem eine an die Rückenlehne wirkende Beschleunigungskraft und eine entsprechende auf die Rückenlehnenaufschlagssicherungsvorrichtung wirkende Kraft entsprechend groß sind, so dass die Rückenlehnenaufschlagssicherungsvorrichtung entkoppelt wird und somit die Rückenlehne zeitweise von dem Sitzbauteil entkoppelt. Eine in Sitzrichtung gerichtete, auf ein oberes Ende der Rückenlehne wirkende Kraft löst ab einer Größe von 155 N einen Auslösefall aus. Eine Kraft die größer ist als Handholdlasten führt zu einer Auslösung der Rückenlehnenaufschlagssicherungsvorrichtung. Der Auslösefall tritt vorzugsweise in einem Crashfall ein. Unter "elastisch verformt" soll dabei insbesondere aufgrund einer einwirkenden Kraft in einem elastischen Bereich in seiner Form verändert, also gestaucht, gedehnt und/oder ausgelenkt verstanden werden, wobei nach einem Wegfall der einwirkenden Kraft eine Ruhestellung eingenommen wird. Dadurch kann die Rückenlehnenaufschlagssicherungsvorrichtung, die insbesondere nach einer Entkopplung der Rückenlehne wieder in ihrer Verriegelstellung verriegelbar ist, besonders einfach mit wenigen Bauteilen, insbesondere wenigen beweglichen Bauteilen, ausgebildet werden. Dadurch kann insbesondere eine kostengünstige Rückenlehnenaufschlagssicherungsvorrichtung, die ein besonders gut replizierbares Auslöseverhalten aufweist, erreicht werden.

Es wird weiter vorgeschlagen, dass die Rückenlehnenaufschlagssicherungsvorrichtung dazu vorgesehen ist, die Rückenlehne vor einem Einwirken der Aufschlagskräfte von dem Sitzbauteil zu entkoppeln. Unter "vor einem Einwirken der Aufschlagskräfte" soll dabei insbesondere ein Zeitpunkt, bevor der Körper eines Passagiers auf die Rückenlehne der Flugzeugsitzvorrichtung auftrifft, verstanden werden. Dabei wird eine Entkopplung der Rückenlehne dabei vorzugsweise durch eine auf die Rückenlehne ausgeübte Beschleunigung, insbesondere durch eine Beschleunigungskraft der Rückenlehne, ausgelöst.

Ferner wird vorgeschlagen, dass die Rückenlehne dazu vorgesehen ist, nach der teilweisen Entkopplung wieder in einer Verriegelstellung verriegelt zu werden. Unter "nach einer teilweisen Entkopplung" soll dabei insbesondere zu einem Zeitpunkt nach der teilweisen Entkopplung während eines Crashfalls verstanden werden.

Es wird insbesondere vorgeschlagen, dass die Rückenlehne insbesondere in einem Crashfall dazu vorgesehen ist, durch ihre Massenträgheit die Rückenlehnenaufschlagssicherungsvorrichtung auszulösen. Darunter, dass die Rückenlehne die Rückenlehnenaufschlagssicherungsvorrichtung durch ihre Massenträgheit auslöst soll dabei insbesondere verstanden werden, dass die Rückenlehne durch ihre Massenträgheit in einem Crashfall durch die auf die Rückenlehne einwirkende Verzögerung eine Kraft in die Rückenlehnenaufschlagssicherungsvorrichtung einleitet, die die Rückenlehnenaufschlagssicherungsvorrichtung aus ihrer Verriegelstellung löst. Dadurch kann die Rückenlehnenaufschlagssicherungsvorrichtung die Rückenlehne zu einem besonders frühen Zeitpunkt des Crashfalls zumindest teilweise entkoppeln. Dadurch kann die Rückenlehne in einem Crashfall besonders vorteilhaft früh aus ihrer aufrechten Stellung herausbewegt werden, was zu besonders vorteilhaften Auftreffpositionen eines Passagiers auf der Rückenlehne führt, wodurch insbesondere ein Verletzungsrisiko verringert werden kann. Dadurch kann eine besonders sichere Flugzeugsitzvorrichtung bereitgestellt werden.

Unter einem "Federelement" soll dabei insbesondere ein Element verstanden werden, das eine von einer Veränderung der Erstreckung und/oder von einer Veränderung der Form abhängige und vorzugsweise zu der Veränderung proportionale Gegenkraft erzeugt, die der Veränderung entgegenwirkt. Unter einem "Blattfederelement" soll dabei insbesondere ein Federelement verstanden werden, das zumindest einen Federschenkel mit einer Haupterstreckungsrichtung aufweist und dazu vorgesehen ist, in einer Richtung orthogonal zu der Haupterstreckungsrichtung elastisch ausgelenkt zu werden. Das Blattfederelement weist vorzugsweise zwei beabstandet zueinander angeordnete Federschenkel auf, die an einem ersten Ende des Blattfederelements miteinander verbunden sind. Die beiden Federschenkel des Blattfederelements bilden dabei zusammen eine U-Form aus. Die beiden Federschenkel des Blattfederelements sind dabei vorzugsweise einstückig miteinander ausgebildet. Die Federschenkel bilden zwischen sich einen Haltebereich aus, in dem vorgesehen ist, ein von der Halteeinheit zu haltendes Element anzuordnen. Die beiden Federschenkel sind dazu vorgesehen, zur Entkopplung in entgegengesetzte Richtungen ausgelenkt zu werden. Die beiden Federschenkel des Blattfederelements sind dazu vorgesehen, jeweils eine Haltekraft auf ein zu haltendes Element auszuüben, welche jeweils in Richtung des anderen Federschenkels gerichtet ist. Ein zu haltendes Element ist dazu vorgesehen, zwischen den beiden Federschenkeln des Blattfederelements eingeklemmt zu werden. Dadurch kann die Halteeinheit besonders einfach und vorteilhaft ausgebildet werden.

Ferner wird vorgeschlagen, dass die Halteeinheit als ein Federpaket aus wenigstens zwei Federelementen ausgebildet ist. Unter einem "Federpaket" soll dabei insbesondere ein Paket aus zumindest zwei, vorzugsweise mehr als zwei nebeneinander angeordneten Federn verstanden werden, die direkt oder indirekt miteinander in Kontakt stehen und sich aneinander abstützen. Dadurch kann die Halteeinheit besonders vorteilhaft ausgebildet werden.

Es wird weiterhin vorgeschlagen, dass die Halteeinheit dazu vorgesehen ist, die Rückenlehnenaufschlagssicherungsvorrichtung in dem Normalbetriebszustand zumindest im Wesentlichen durch einen Kraftschluss zu verriegeln. Unter einem "Kraftschluss" soll dabei insbesondere eine lösbare Verbindung verstanden werden, wobei eine Haltekraft zwischen zwei Bauteilen vorzugsweise durch eine Reibkraft zwischen den Bauteilen übertragen wird. Unter "im Wesentlichen durch einen Kraftschluss" soll dabei insbesondere verstanden werden, dass eine Verriegelung zumindest zu einem Großteil von einer durch einen Kraftschluss ausgelösten Haltekraft zustande kommt, vorzugsweise lediglich durch eine durch einen Kraftschluss ausgelöste Haltekraft, es aber grundsätzlich auch sein kann, dass eine Verriegelung zumindest teilweise durch einen Formschluss zustande kommt. Dadurch kann die Halteeinheit besonders vorteilhaft einfach ausgebildet werden.

Des Weiteren wird vorgeschlagen, dass die Rückenlehnenaufschlagssicherungsvorrichtung zumindest eine Absorptionseinheit aufweist, die nach einer Entkopplung durch die elastische Verformung der wenigstens einen Halteeinheit dazu vorgesehen ist, zumindest eine Bewegungsenergie der Rückenlehne umzuwandeln. Unter einer "Absorptionseinheit" soll dabei insbesondere eine Einheit verstanden werden, die in wenigstens einem Betriebszustand dazu vorgesehen ist, Energie aufzunehmen und/oder zu vernichten, um so einem anderen System, wie insbesondere der Rückenlehne, Energie zu entziehen. Dabei ist die Absorptionseinheit insbesondere dazu vorgesehen, auch Auftreffenergie, also Energie, die ein während eines Crashfalls auf die Rückenlehne auftreffender Passagier in die Rückenlehne einbringt, zumindest teilweise zu absorbieren, also insbesondere umzuwandeln. Dabei ist die Absorptionseinheit vorzugsweise als eine Einheit ausgebildet, die durch plastische Verformung gedehnt wird und durch die plastische Verformung eine Energie vernichtet. Die Absorptionseinheit ist als eine Einheit ausgebildet, die eine Bewegungsenergie, insbesondere eine Bewegungsenergie der Rückenlehne, durch plastische Verformung in Verformungsenergie, also Wärme umwandelt. Dabei ist die Absorptionseinheit vorzugsweise aus einem Metall gebildet und nimmt bei der Verformung Verformungsenergie auf. Dabei kann über eine Materialstärke, das Material und eine Form des Verzögerungselements eine Kraft eingestellt werden, die nötig ist, um das Verzögerungselement zu verformen. Grundsätzlich ist es auch denkbar, dass das Verzögerungselement als ein Hydraulik- oder Gasdruckzylinder ausgebildet ist, dessen Zylinderstange gegen den Druck eines Gases oder einer Flüssigkeit aus einem Gehäuse ausgefahren werden kann. Grundsätzlich ist es auch denkbar, dass das Verzögerungselement durch wenigstens zwei Kammern gebildet ist, die durch wenigstens eine mit wenigstens einem Durchgangsloch versehene Blende voneinander getrennt sind, wobei ein Fluid zur Verzögerung durch die Durchgangslöcher der Blende gedrückt wird. Grundsätzlich ist es ebenfalls denkbar, dass das Verzögerungselement als ein Element ausgebildet ist, das dazu vorgesehen ist, zur Verzögerung eines anderen Elements zerstört zu werden, um dadurch Energie abzubauen. Dadurch kann eine Aufschlagskraft eingestellt und die Rückenlehne gezielt abgebremst werden. Insbesondere kann auch ein Auftreffen des Passagiers auf der Rückenlehne während eines Crashfalls abgebremst werden.

Weiterhin wird vorgeschlagen, dass die Absorptionseinheit dazu vorgesehen ist, durch plastische Verformung die Bewegungsenergie der Rückenlehne umzuwandeln. Unter einer "plastischen Verformung" soll dabei insbesondere eine Verformung eines Materials unter Einwirkung einer Kraft verstanden werden, die bei einer Überschreitung der Fließgrenze des Materials eintritt und irreversibel ist. Dadurch kann die Absorptionseinheit besonders vorteilhaft einfach und kostengünstig ausgebildet werden.

Außerdem wird vorgeschlagen, dass die Absorptionseinheit zumindest teilweise getrennt von der Halteeinheit ausgebildet ist. Unter "zumindest teilweise getrennt" soll dabei insbesondere verstanden werden, dass Einheiten oder Elemente, wie insbesondere die Absorptionseinheit und die Halteeinheit, zumindest teilweise von unterschiedlichen Bauteilen ausgebildet werden. Dadurch kann die Rückenlehnenaufschlagssicherungsvorrichtung besonders einfach ausgebildet werden.

Es wird weiter vorgeschlagen, dass die Rückenlehnenaufschlagssicherungsvorrichtung wenigstens ein Koppelelement aufweist, das mit dem Sitzelement fest gekoppelt und in dem Normalbetriebszustand dazu vorgesehen ist, von der Halteeinheit gehalten zu werden. Unter einem "Koppelelement" soll dabei insbesondere ein Element verstanden werden, das dazu vorgesehen ist, zumindest zwei Elemente miteinander zu verbinden.

Dadurch kann die Rückenlehnenaufschlagssicherungsvorrichtung vorteilhaft einfach an das Sitzelement angebunden werden.

Zudem wird vorgeschlagen, dass die Rückenlehnenaufschlagssicherungsvorrichtung wenigstens ein Koppelelement aufweist, das mit der Rückenlehne und mit dem Halteelement fest gekoppelt ist. Dadurch kann die Rückenlehnenaufschlagssicherungsvorrichtung besonders vorteilhaft mit der Rückenlehne gekoppelt werden.

Weiter wird vorgeschlagen, dass die Rückenlehnenaufschlagssicherungsvorrichtung zwei beabstandet zueinander angeordnete Rahmenelemente aufweist, die zumindest mit einem mit der Rückenlehne fest gekoppelten Koppelelement verbunden sind. Unter einem "Rahmenelement" soll dabei insbesondere ein Teil eines tragenden Rahmens der Rückenlehnenaufschlagssicherungsvorrichtung verstanden werden, der dazu vorgesehen ist, dass Elemente der Rückenlehnenaufschlagssicherungsvorrichtung, wie insbesondere die wenigstens eine Halteeinheit und die wenigstens eine Absorptionseinheit, angebunden sind. Die beiden Rahmenelemente spannen zwischen sich dabei einen Raum auf, in dem zumindest teilweise Elemente der Rückenlehnenaufschlagssicherungsvorrichtung, wie insbesondere die wenigstens eine Halteeinheit, angeordnet sind. Die Rahmenelemente sind dabei vorzugsweise plattenförmig ausgebildet. Die Rahmenelemente sind dabei vorzugsweise aus dünnen Metallblechen gebildet. Grundsätzlich ist es auch denkbar, dass die Rahmenelemente aus dünnen Faserverbundwerkstoffplatten, wie insbesondere Organoblechen, ausgebildet sind. Die Rahmenelemente sind dabei vorzugsweise über eine Verbindungsbrücke einstückig miteinander ausgebildet. Die beiden Rahmenelemente und die Verbindungsbrücke sind von einem Bauteil gebildet. Dabei sind die Rahmelemente und die Verbindungsbrücke vorzugsweise von einem gebogenen Blech gebildet. Grundsätzlich ist es auch denkbar, dass die Rahmenelemente als einzelne Platten ausgebildet sind, die erst in einem montierten Zustand miteinander verbunden sind. Dadurch kann vorteilhaft die Rückenlehnenaufschlagssicherungsvorrichtung besonders vorteilhaft ausgebildet werden.

Ferner wird vorgeschlagen, dass die Rückenlehnenaufschlagssicherungsvorrichtung wenigstens ein Einstellelement aufweist, das durch Verstellung dazu vorgesehen ist, eine Haltekraft der Halteeinheit zu verändern. Unter einem "Einestellelement" soll dabei insbesondere ein Element verstanden werden, mittels dessen eine von der Halteeinheit ausgeübte Haltekraft, insbesondere eine von der Halteeinheit auf das mit dem Sitzteil verbundene Koppelement wirkende Haltekraft variiert werden kann, insbesondere ohne die Halteeinheit zu verändern und insbesondere auch ohne die Halteeinheit auszutauschen. Dadurch kann die Rückenlehnenaufschlagssicherungsvorrichtung besonders vorteilhaft einfach für unterschiedliche Rückenlehnen- und Flugzeugsitzkonfigurationen angepasst werden.

Es wird weiterhin vorgeschlagen, dass das Einstellelement zur Veränderung der Haltekraft dazu vorgesehen ist, eine Länge eines zur Entkopplung elastisch verformbaren Bereichs des Halteelements zu verändern. Dadurch kann vorteilhaft die Haltekraft besonders einfach eingestellt werden.

Des Weiteren wird vorgeschlagen, dass die Rückenlehnenaufschlagssicherungsvorrichtung dazu vorgesehen ist, einen Auftreffbereich eines Kopfs auf der Rückenlehne nach unten zu versetzen. Vorteilhaft wird vorgeschlagen, dass die Rückenlehnenaufschlagssicherungsvorrichtung dazu vorgesehen ist, einen Auftreffbereich eines Kopfs auf der Rückenlehne um zumindest 1,5 cm, vorteilhaft zumindest 3 cm nach unten zu versetzen. Unter einem "Auftreffbereich" soll dabei insbesondere ein Bereich auf einer Rückseite der Rückenlehne verstanden werden, auf dem ein hinter dem Flugzeugsitz sitzender Passagier oder Dummie in einem Crashfall mit seinem Kopf auf die aus ihrer Normalstellung ausgelenkte Stellung auftrifft. Unter "nach unten versetzt" soll dabei insbesondere in Richtung entlang einer Längsachse der Rückenlehne in Richtung eines unteren Endes der Rückenlehne versetzt, verstanden werden. Dabei soll unter "nach unten versetzt" insbesondere in Bezug auf einen Auftreffbereich ohne Entkopplung mittels einer Rückenlehnenaufschlagssicherungsvorrichtung nach unten versetzt verstanden werden. Eine Versetzung des Auftreffbereichs nach unten wird insbesondere durch die eine Verschwenkung der Rückenlehne nach vorne erreicht, die durch die Entkopplung der Rückenlehne vor einem Auftreffen des Passagiers auf der Rückenlehne entsteht. Durch die Verschwenkung nach vorne wird ein Winkel der Rückenlehne relativ zu einer Aufständerebene und insbesondere auch zu dem hinter dem Flugzeugsitz sitzenden Passagier verändert. Dadurch ergibt sich bei einer Vorwärtsbewegung des hinter dem Flugzeugsitz sitzenden Passagiers, der insbesondere im Bereich der Hüfte, die durch einen Sicherheitsgurt gesichert ist und dadurch mit seinem Oberkörper eine Rotationsbewegung in Richtung der Rückenlehne macht, durch rein geometrische Gegebenheiten, dass der Kopf des Passagiers im Vergleich zu einer senkrecht stehenden Rückenlehne in einem nach unten verschobenen Auftreffbereich auf der Rückenlehne auftrifft. Dadurch kann ein Auftreffbereich des Kopfes insbesondere aus einem Gefahrenbereich, beispielsweise aus einem Bereich in dem eine Esstischbefestigung an der Rückenlehne angeordnet ist, herausbewegt werden. Dadurch kann eine Flugzeugsitzvorrichtung bereitgestellt werden, die besonders sicher ausgebildet ist.

Die erfindungsgemäße Flugzeugsitzvorrichtung soll hierbei nicht auf die oben beschriebene Anwendung und Ausführungsform beschränkt sein. Insbesondere kann die erfindungsgemäße Flugzeugsitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Flugzeugsitzes während eines Crashtests ohne eine erfindungsbemäße Flugzeugsitzvorrichtung, also insbesondere ohne Rückenlehnenaufschlagssicherungsvorrichtung,
- Fig. 2: eine schematische Darstellung eines Flugzeugsitzes während eines Crashtests mit einer erfindungsbemäßen Flugzeugsitzvorrichtung, die eine Rückenlehnenaufschlagssicherungsvorrichtung aufweist,
- Fig. 3: eine schematische Darstellung einer erfindungsgemäßen Flugzeugsitzvorrichtung in einem ersten Ausführungsbeispiel, in einem Normalbetriebszustand mit einer Rückenlehnenaufschlagssicherungsvorrichtung in einer Verriegelstellung,
- Fig. 4: eine schematische Darstellung der Flugzeugsitzvorrichtung mit der Rückenlehnenaufschlagssicherungsvorrichtung während eines Crashfalls,
- Fig. 5: eine schematische Darstellung der Flugzeugsitzvorrichtung mit der Rückenlehnenaufschlagssicherungsvorrichtung nach einem Crashfall,
- Fig. 6: eine schematische Darstellung der Rückenlehnenaufschlagssicherungsvorrichtung,
- Fig. 7: eine schematische Seitenansicht der Rückenlehnenaufschlagssicherungsvorrichtung,
- Fig. 8: eine schematische Ansicht der Rückenlehnenaufschlagssicherungsvorrichtung von unten,
- Fig. 9: eine schematische Darstellung einer erfindungsgemäßen Flugzeugsitzvorrichtung in einem zweiten Ausführungsbeispiel mit einer Rückenlehnenaufschlagssicherungsvorrichtung in einer Verriegelstellung und
- Fig. 10: eine schematische Darstellung einer erfindungsgemäßen Flugzeugsitzvorrichtung in einem dritten Ausführungsbeispiel mit einer Rückenlehnenaufschlagssicherungsvorrichtung in einer Verriegelstellung.

### Beschreibung der Ausführungsbeispiele

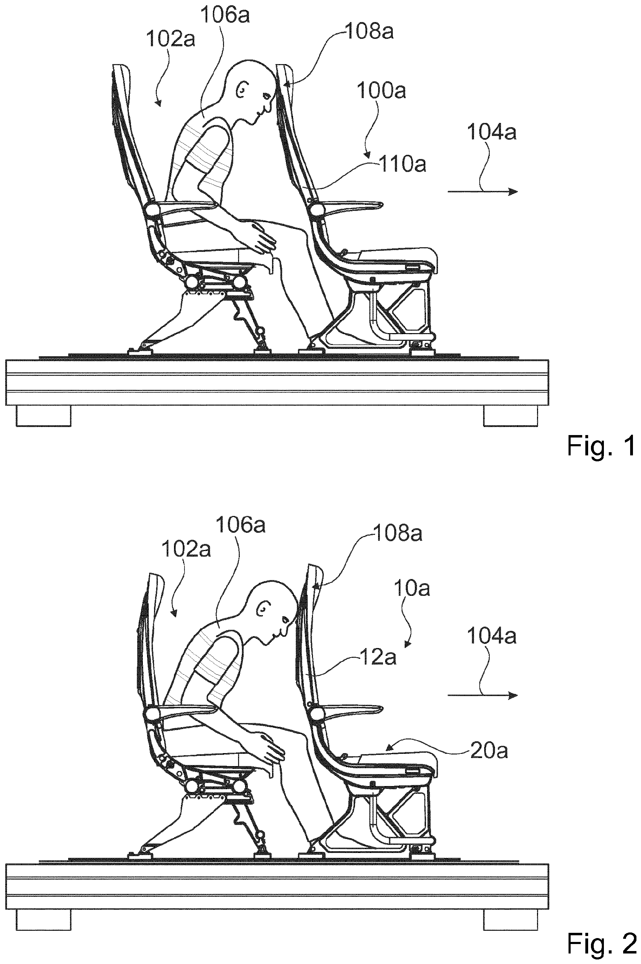

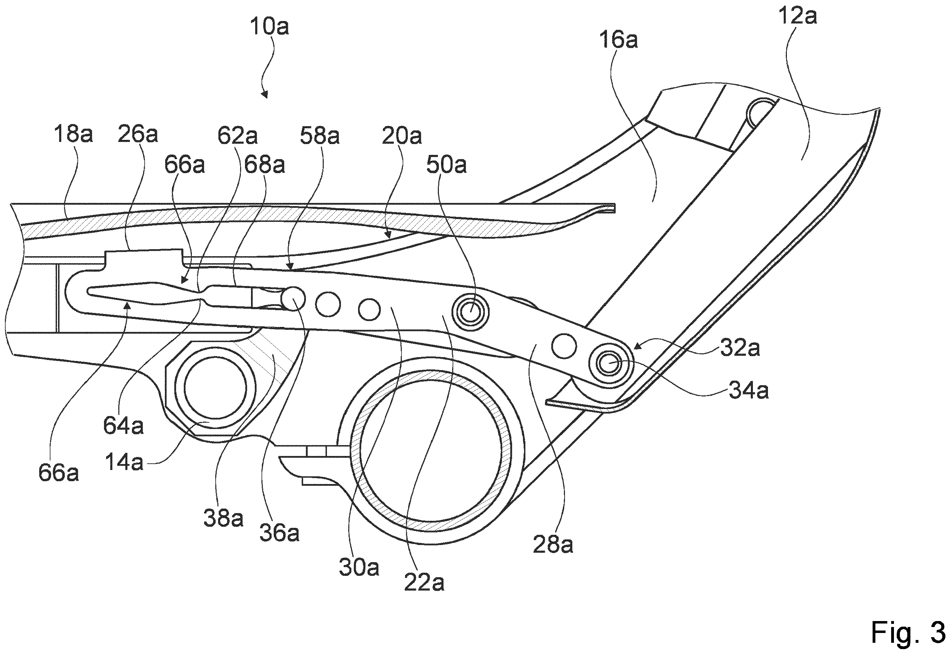

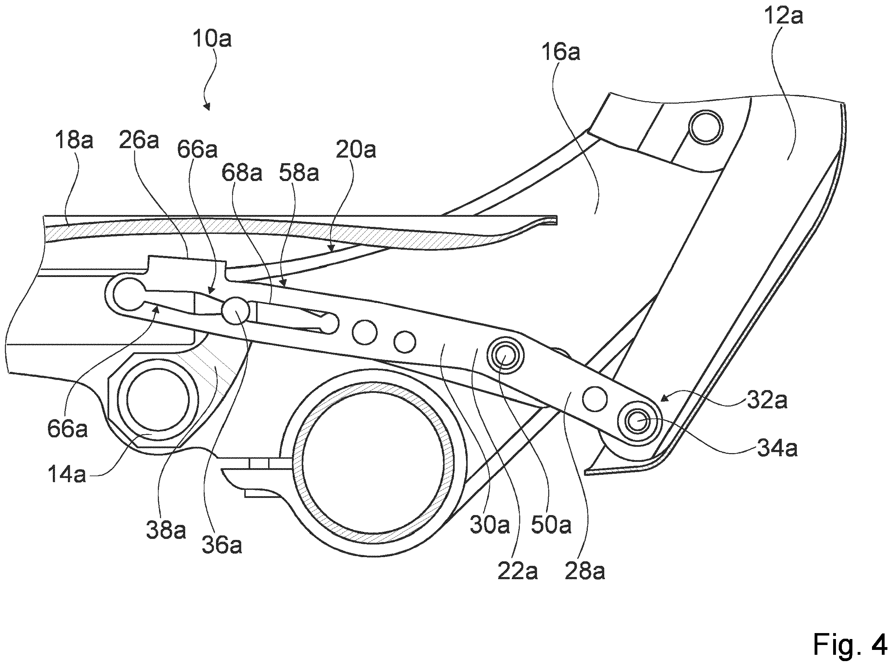

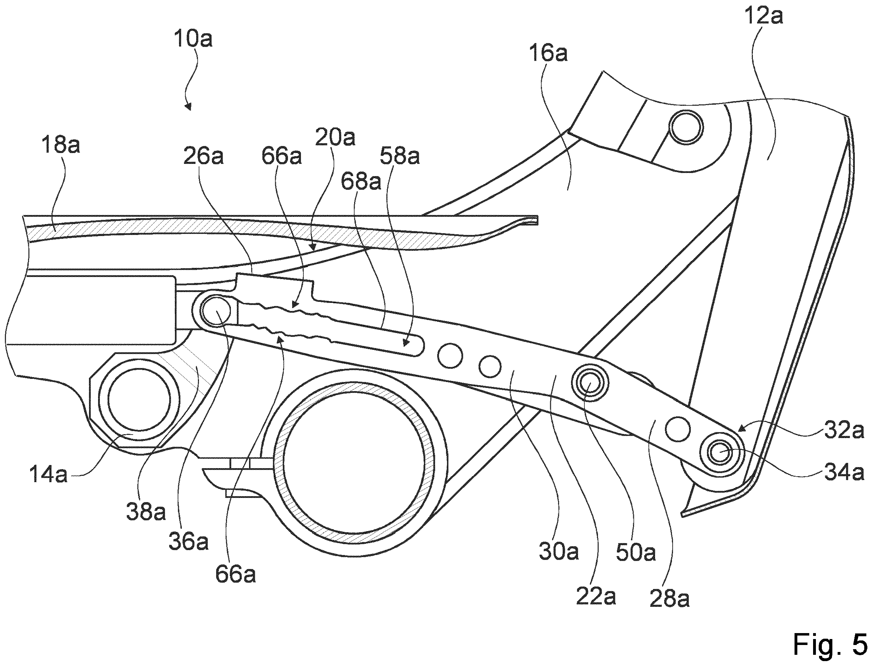

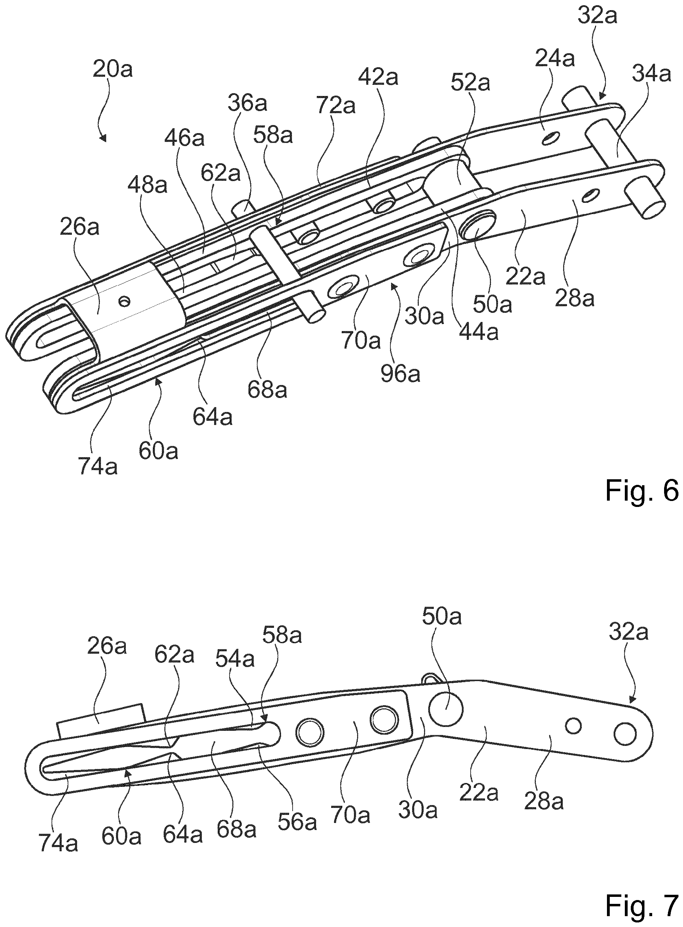

Die Figuren 2 bis 8 zeigen eine erfindungsgemäße Flugzeugsitzvorrichtung in einem ersten Ausführungsbeispiel. Die Flugzeugsitzvorrichtung ist dabei Teil eines teilweise dargestellten Flugzeugsitzes 10a. Der Flugzeugsitz 10a ist dabei Teil eines nicht näher dargestellten Flugzeugs. Der Flugzeugsitz 10a ist dabei in einem montierten Zustand in einer Flugzeugkabine des Flugzeugs aufgeständert. Dazu weist der Flugzeugsitz 10a eine Aufständereinheit auf. Mittels der Aufständereinheit ist der Flugzeugsitz 10a auf einem Kabinenboden der Flugzeugkabine aufgeständert. Der Kabinenboden bildet eine Aufständerebene für den Flugzeugsitz 10a aus. Der Flugzeugsitz 10a ist dabei als ein Teil einer Sitzreihe ausgebildet, die mehr als einen Flugzeugsitz 10a, vorzugsweise zumindest zwei Flugzeugsitze 10a, umfasst. Der Flugzeugsitz 10a bildet dabei eine Sitzrichtung aus. Die Sitzrichtung ist als die Richtung definiert, in der ein Passagier auf dem Flugzeugsitz 10a sitzt. Dabei ist die Sitzrichtung parallel zu einer Flugrichtung ausgebildet. Grundsätzlich ist es auch denkbar, dass die Sitzrichtung des Flugzeugsitzes 10a zu der Flugrichtung geneigt ist. Die Flugrichtung ist dabei von einer Haupterstreckung der Flugzeugkabine gebildet. Die Aufständereinheit ist dabei als eine gemeinsame Aufständereinheit der Flugzeugsitze 10a der Flugzeugsitzreihe ausgebildet. Die Flugzeugsitzvorrichtung umfasst eine Rückenlehne 12a. Die Rückenlehne 12a ist dabei dazu vorgesehen, dass eine Person, die auf dem Flugzeugsitz 10a sitzt, dessen Teil die Flugzeugsitzvorrichtung ist, ihren Rücken an der Rückenlehne 12a abstützen kann. Die Rückenlehne 12a ist schwenkbar zu der Aufständereinheit angeordnet. Die Rückenlehne 12a ist dabei an einem nicht näher dargestellten Sitzteiler über eine nicht näher dargestellte Lagerstelle schwenkbar angelenkt. Die Flugzeugsitzvorrichtung umfasst weiter ein Sitzbauteil 14a. Das Sitzbauteil 14a ist als eine Querversteifungseinheit ausgebildet, die dazu vorgesehen ist, die Rückenlehne 12a in der Querversteifungseinheitenquerrichtung zu versteifen. Zudem ist das als Querversteifungseinheit ausgebildete Sitzbauteil 14a dazu vorgesehen, die eine Seite des Flugzeugsitzes 10a, dessen Teil die Flugzeugsitzvorrichtung ist, mit der weiteren Seite des Flugzeugsitzes 10a zu verbinden. Das als Querversteifungseinheit ausgebildete Sitzbauteil 14a erstreckt sich dabei zwischen Sitzteilern 16a des Flugzeugsitzes 10a. Das als Querversteifungseinheit ausgebildete Sitzbauteil 14a ist drehbar in Sitzteilern 16a gelagert. Das als Querversteifungseinheit ausgebildete Sitzbauteil 14a ist dazu vorgesehen, bei der Bewegung der Rückenlehne 12a gedreht zu werden. Das als Querversteifungseinheit ausgebildete Sitzbauteil 14a ist als ein Torsionselement ausgebildet. Im vorliegenden Ausführungsbeispiel ist das als Querversteifungseinheit ausgebildete Sitzbauteil 14a als ein Torsionsrohr ausgebildet. Ferner weist die Flugzeugsitzvorrichtung einen Sitzboden 18a auf. Grundsätzlich ist es auch denkbar, dass das Sitzbauteil 14a als ein Sitzboden oder ein Bauteil der Sitzstruktur ausgebildet ist. Der Sitzboden 18a bildet eine Sitzfläche aus. Der Sitzboden 18a ist mit der Rückenlehne 12a gekoppelt. Dabei sind die Rückenlehne 12a und der Sitzboden 18a gelenkig miteinander verbunden. Über eine nicht näher dargestellte Kinematik der Flugzeugsitzvorrichtung sind die Rückenlehne 12a und der Sitzboden 18a schwenkbar miteinander gekoppelt. Dabei sind die Rückenlehne 12a und der Sitzboden 18a in verschiedenen Stellungen zueinander verschiebbar und können in diesen verschiedenen Stellungen fixiert werden. Dabei sind die Rückenlehne 12a und der Sitzboden 18a vorzugsweise stufenlos zueinander verschiebbar. Grundsätzlich ist es auch denkbar, dass die Rückenlehne 12a in einem Normalbetriebszustand starr mit dem Sitzboden 18a oder einer Sitzstruktur verbunden ist und der Flugzeugsitz 10a lediglich eine Sitzstellung aufweist.

Die Flugzeugsitzvorrichtung umfasst eine Rückenlehnenaufschlagssicherungsvorrichtung 20a. Die Rückenlehnenaufschlagssicherungsvorrichtung 20a ist zumindest in einem Normalbetriebszustand dazu vorgesehen, die Rückenlehne 12a und das Sitzbauteil 14a in einer Verriegelstellung starr zu verbinden. In dem Normalbetriebszustand, der einen normalen und ordnungsgemäßen Gebrauch des Flugzeugsitzes 10a abbildet, können Kräfte über die Rückenlehnenaufschlagssicherungsvorrichtung 20a von der Rückenlehne 12a in das Sitzbauteil 14a übertragen werden. In dem Normalbetriebszustand, in dem die Rückenlehnenaufschlagssicherungsvorrichtung 20a die Rückenlehne 12a und das Sitzbauteil 14a in der Verriegelstellung starr verbindet, können Kräfte nach vorne, also in Flugrichtung und entgegen der Flugrichtung, übertragen werden.

Die Rückenlehnenaufschlagssicherungsvorrichtung 20a ist dazu vorgesehen, die Rückenlehne 12a in zumindest einem Betriebszustand von dem Sitzbauteil 14a teilweise zu entkoppeln. Durch die teilweise Entkopplung der Rückenlehne 12a von dem Sitzbauteil 14a können in einem Crashfall die Rückenlehne 12a und das Sitzbauteil 14a eine Relativbewegung zueinander ausüben, um so eine Verletzungsgefahr für einen hinter dem Flugzeugsitz 10a sitzenden Passagier zu reduzieren.

Insbesondere in einem Crashfall mit einer Verzögerung entgegen der Flugrichtung entkoppelt die Rückenlehnenaufschlagssicherungsvorrichtung 20a die Rückenlehne 12a von dem Sitzbauteil 14a. Die Rückenlehnenaufschlagssicherungsvorrichtung 20a reduziert in einem Crashfall die Aufschlagskräfte, die auf die Rückenlehne 12a einwirken, zumindest teilweise, wodurch auch die Kraft auf einen Passagier, der die Kraft auf die Rückenlehne 12a ausübt, reduziert wird. Eine Verringerung der Aufschlagskräfte wird zumindest dadurch erreicht, dass die Rückenlehne 12a durch die zeitweise Entkopplung mit einem oberen Ende nach vorne, in Flugrichtung verschwenkt wird und dadurch zumindest teilweise aus einer Bewegungsbahn eines Passagiers herausbewegt wird und zur normalen Sitzstellung nach vorne geneigt ist, wodurch ein Auftreffwinkel und ein Auftreffbereich 108a des Passagiers verändert werden. Durch eine Neigung der Rückenlehne 12a aus der Sitzstellung heraus nach vorne trifft ein hinter dem Flugzeugsitz 10a sitzender Passagier nicht auf der im Wesentlichen senkrecht stehenden Rückenlehne 12a auf, sondern auf einer nach vorne geneigten Rückenlehne 12a. Die Rückenlehnenaufschlagssicherungsvorrichtung 20a ist dazu vorgesehen, den Auftreffbereich 108a eines Kopfs des Passagiers auf der Rückenlehne 12a nach unten zu versetzen. Die Rückenlehnenaufschlagssicherungsvorrichtung 20a versetzt einen Auftreffbereich 108a eines Kopfes eines Passagiers um zumindest 3 cm nach unten. Durch die Bewegung der Rückenlehne 12a nach vorne wird der Auftreffbereich 108a des Kopfs des Passagiers, im Gegensatz zu einer aufrechten Sitzstellung der Rückenlehne 12a, nach unten verschoben. Durch die Bewegung der Rückenlehne 12a nach vorne wird ebenso ein Auftreffzeitpunkt, in dem ein Passagier auf der Rückenlehne 12a auftrifft, im Gegensatz zu einer aufrecht stehenden Rückenlehne 12a verzögert. In der Figur 1 ist dabei schematisch ein Crashtest dargestellt. In Figur 1 ist schematisch ein aus dem Stand der Technik bekannter Flugzeugsitz 100 dargestellt. Der Flugzeugsitz 100 weist keine Rückenlehnenaufschlagssicherungsvorrichtung auf. Hinter dem Flugzeugsitz 100 ist ein Flugzeugsitz 102 angeordnet, auf dem für den Crashtest ein Crashtestdummy 106 angeordnet ist. Bei einem Crashtest wird ein Crashfall in einem Flugzeug simuliert, bei dem eine negative Beschleunigung entgegen einer Testrichtung 104 auf die Flugzeugsitze 100, 102 und den Crashtestdummy 106 wirkt. Durch die Verzögerung wird der Crashtestdummy 106 mit seinem Oberkörper und seinem Kopf nach vorne in Richtung des Flugzeugsitzes 100 geschleudert. Der Crashtestdummy 106 trifft mit seinem Kopf in einem Auftreffbereich 108 auf einer Rückenlehne 110 des Flugzeugsitzes 100 auf. Die Rückenlehne 110 des Flugzeugsitzes 100 ohne eine Rückenlehnenaufschlagssicherungsvorrichtung steht in einer im Wesentlichen aufrechten Position. Dadurch ist der Auftreffbereich 108 in einem oberen Bereich der Rückenlehne 110, insbesondere in einem Bereich der Kopfstütze angeordnet.

Figur 2 zeigt einen identischen Crashtest wie in Figur 1, wobei der vordere Flugzeugsitz 100 durch einen Flugzeugsitz 10a mit einer erfindungsgemäßen Flugzeugsitzvorrichtung, die eine Rückenlehnenaufschlagssicherungsvorrichtung 20a umfasst, ausgetauscht wurde. Auf dem Flugzeugsitz 102 ist der Crashtestdummy 106 angeordnet. Ein Abstand zwischen dem Flugzeugsitz 102 und dem Flugzeugsitz 10a ist gleich wie ein Abstand zwischen dem Flugzeugsitz 102 und dem Flugzeugsitz 100 aus der Crashtest der Figur 1. Der Crashtestdummy 106 ist in den Crashtests der Figur 1 und Figur 2 identisch ausgebildet. Ebenso ist eine negative Verzögerung in beiden Crashtests gleich. Wie in Figur 2 zu erkennen, ist die Rückenlehne 12a des Flugzeugsitzes 10a durch die Rückenlehnenaufschlagssicherungsvorrichtung 20a teilweise von dem Sitzbauteil 14 entkoppelt und kann sich bei dem Crashtest durch seine Massenträgheit nach vorne verschwenken. Dadurch bewegt sich die Rückenlehne 12a von dem Crashtestdummy 106 mit einem oberen Ende weg. Dadurch verschiebt sich, wie in Figur 2 im Vergleich zu Figur 1 zu sehen, der Auftreffbereich 108 in dem der Crashtestdummy mit seinem Kopf auf die Rückenlehne 12a auftrifft nach unten.

Die Rückenlehne 12a und das als Querversteifungseinheit ausgebildete Sitzbauteil 14a sind mittels der Rückenlehnenaufschlagssicherungsvorrichtung 20a miteinander gekoppelt. Die Rückenlehnenaufschlagssicherungsvorrichtung 20a weist eine Verriegelstellung und eine Entriegelstellung auf. In der Verriegelstellung ist die Rückenlehnenaufschlagssicherungsvorrichtung 20a verriegelt und die Rückenlehne 12a ist fest mit dem Sitzbauteil 14a gekoppelt. In der Entriegelstellung ist die Rückenlehne 12a von dem Sitzbauteil 14a entkoppelt und kann relativ zu dem Sitzbauteil 14a bewegt werden. Dabei kann in der Entriegelstellung der Rückenlehnenaufschlagssicherungsvorrichtung 20a die Rückenlehne 12a zu dem Sitzbauteil 14a um einen vorteilhaften Winkel verschwenkt werden.

Die Rückenlehnenaufschlagssicherungsvorrichtung 20a entkoppelt die Rückenlehne 12a vor einem Einwirken der Aufschlagskräfte auf die Rückenlehne 12a von dem Sitzbauteil 14a. Dadurch wird die Rückenlehne 12a in einem Crashfall von dem Sitzbauteil 14a entkoppelt, bevor ein Passagier, der auf einem Flugzeugsitz hinter dem Flugzeugsitz 10a sitzt, auf die Rückenlehne 12a aufschlägt und die Aufschlagskräfte auf die Rückenlehne 12a überträgt. Dadurch ist die Rückenlehne 12a bei einem Auftreffen des Passagiers auf die Rückenlehne 12a, also beim Einwirken der Aufschlagskräfte von dem Sitzbauteil 14a, teilweise entkoppelt und kann so vor und/oder während des Auftreffens des Passagiers auf die Rückenlehne 12a zu dem Sitzbauteil 14a bewegt werden, so dass der Auftreffbereich 108a nach unten versetzt wird und ein Teil der Aufschlagskräfte absorbiert und/oder vorteilhaft abgelenkt werden.

Die Rückenlehne 12a ist dazu vorgesehen, nach der teilweisen Entkopplung wieder in einer Verriegelstellung verriegelt zu werden. Dadurch kann die Rückenlehne 12a nach der teilweisen Entkopplung und der dabei vollzogenen Bewegung zu dem Sitzbauteil 14a wieder in der Verriegelstellung verriegelt werden. Die Verriegelstellung kann dabei dieselbe sein, in der die Rückenlehne 12a in dem Normalbetriebszustand verriegelt ist, es ist aber auch denkbar, dass sich die Verriegelstellung, in der die Rückenlehne 12a nach der teilweisen Entkopplung wieder verriegelt wird, von der Verriegelstellung in dem Normalbetriebszustand unterscheidet. Dadurch kann die Rückenlehne 12a nach einer Verstellung aus der Verriegelstellung von einem Passagier wieder in der Verriegelstellung gesichert werden, um so einen sicheren Fluchtweg zu ermöglichen, in dem die Rückenlehne 12a nicht im Weg ist. Des Weiteren können nach der Verriegelung der Rückenlehne 12a vorteilhaft wieder Handhold-Lasten über die verriegelte Rückenlehne 12a in die Aufständereinheit des Flugzeugsitzes 10a eingeleitet werden, wodurch sich ein Passagier vorteilhaft an der Rückenlehne 12a festhalten kann, ohne dass diese verschwenkt. Die Rückenlehnenaufschlagssicherungsvorrichtung 20a ist dazu vorgesehen, nach der teilweisen Entkopplung wieder in eine Verriegelstellung gebracht zu werden und dadurch die Rückenlehne 12a nach der teilweisen Entkopplung wieder in der Verriegelstellung zu verriegeln.

Die Rückenlehnenaufschlagssicherungsvorrichtung 20a umfasst ein erstes Rahmenelement 22a und ein zweites Rahmenelement 24a. Die beiden Rahmenelemente 22a, 24a sind jeweils als dünne Platten ausgebildet. Die Rahmenelemente 22a, 24a sind als Flachstäbe ausgebildet. Die Rahmenelemente 22a, 24a sind im Wesentlichen identisch ausgebildet. Grundsätzlich wäre es auch denkbar, dass die beiden Rahmenelemente 22a, 24a sich in ihrer Form unterscheiden. Die Rahmenelemente 22a, 24a sind beabstandet zueinander angeordnet. Die beiden Rahmenelemente 22a, 24a spannen zwischen sich einen Raum auf. Der Raum, den die beiden Rahmenelemente 22a, 24a aufspannen, ist dazu vorgesehen, dass Bauteile der Rückenlehnenaufschlagssicherungsvorrichtung 20a darin angeordnet werden können. Die Rahmenelemente 22a, 24a weisen ein erstes, hinteres Ende auf. Mit ihrem hinteren Ende sind die Rahmenelemente 22a, 24a der Rückenlehne 12a zugewandt. Die Rahmenelemente 22a, 24a weisen ein zweites, dem ersten Ende abgewandtes hinteres Ende auf. Das zweite Ende der Rahmenelemente 22a, 24a ist im Bereich des Sitzbauteils 14a angeordnet. In einem Bereich des zweiten Endes sind die Rahmenelemente 22a, 24a über ein Brückenelement 26a miteinander verbunden. Die Rahmenelemente 22a, 24a und das Brückenelement 26a sind einstückig miteinander ausgebildet. Die Rahmenelemente 22a, 24a und das Brückenelement 26a sind als ein Blechbiegeteil ausgebildet. Die Rahmenelemente 22a, 24a weisen jeweils einen ersten kurzen Teilbereich 28a und einen langen Teilbereich 30a auf. Der kurze Teilbereich 28a ist jeweils an dem ersten, hinteren Ende des Rahmenelements 22a, 24a angeordnet. Der lange Teilbereich 30a ist jeweils an einem zweiten vorderen Ende des Rahmenelements 22a, 24a angeordnet. Der kurze Teilbereich 28a ist zu dem zweiten Teilbereich 30a geneigt angeordnet. An dem ersten hinteren Ende weisen die Rahmenelemente 22a, 24a eine Lagerstelle 32a auf. Die Lagerstelle 32a ist von zwei koaxial angeordneten, in die Rahmenelemente 22a, 24a eingebrachten Durchgangslöchern ausgebildet. Die Lagerstelle 32a ist zur Anbindung der Rückenlehnenaufschlagssicherungsvorrichtung 20a an die Rückenlehne 12a vorgesehen. Die Rückenlehnenaufschlagssicherungsvorrichtung 20a weist ein Koppelelement 34a auf, das zur festen Kopplung zwischen der Rückenlehnenaufschlagssicherungsvorrichtung 20a und der Rückenlehne 12a vorgesehen ist. Das Koppelelement 34a ist als ein Bolzen ausgebildet. Über das als Bolzen ausgebildete Koppelelement 34a sind die Rückenlehne 12a und die Rückenlehnenaufschlagssicherungsvorrichtung 20a fest miteinander gekoppelt. Dabei sind die Rückenlehne 12a und die Rückenlehnenaufschlagssicherungsvorrichtung 20a über das Koppelelement 34a drehbar zueinander.

Die Rückenlehnenaufschlagssicherungsvorrichtung 20a umfasst ein zweites Koppelelement 36a, das zur festen Kopplung der Rückenlehnenaufschlagssicherungsvorrichtung 20a mit dem Sitzbauteil 14a vorgesehen ist. Das zweite Koppelelement 36a ist als ein Bolzen ausgebildet. Das zweite Koppelelement 36a ist über ein Hebelelement 38a mit dem als Torsionsrohr ausgebildeten Sitzbauteil 14a verbunden. Über das Hebelelement 38a kann ein Drehmoment in das als Torsionsrohr ausgebildete Sitzbauteil 14a eingeleitet werden. Das Koppelelement 34a ist mit den Rahmenelementen 22a, 24a der Rückenlehnenaufschlagssicherungsvorrichtung 20a verschiebbar gekoppelt. Die Rahmenelemente 22a, 24a der Rückenlehnenaufschlagssicherungsvorrichtung 20a weisen einen Lagerbereich 40a auf. Der Lagerbereich 40a ist in dem langen Teilbereich 30a der Rahmenelemente 22a, 24a angeordnet. Der Lagerbereich 40a ist von Langlöchern 68a in den beiden Rahmenelementen 22a, 24a ausgebildet. Die Langlöcher 68a, die den Lagerbereich 40a ausbilden, weisen eine Breite auf, die im Wesentlichen einem Durchmesser des als Bolzen ausgebildeten Koppelelements 36a entspricht, sodass dieses in dem Lagerbereich 40a verschiebbar angeordnet ist. Ein vorderes Ende des Lagerbereichs 40a ist an einem Haltebereich 58a des Koppelelements 36a angeordnet, in dem das Koppelelement 36a in einem Verriegelzustand angeordnet ist. Der Lagerbereich 40a erstreckt sich in Richtung eines dem kurzen Teilbereich 28a abgewandten Endes der Rahmenelemente 22a, 24a.

Grundsätzlich ist es auch denkbar, dass die Rückenlehnenaufschlagssicherungsvorrichtung 20a bei einem Flugzeugsitz 10a verwendet wird, der eine starre Rückenlehne 12a aufweist und dadurch insbesondere nicht in eine Komfortstellung gebracht werden kann. Ist die Rückenlehne 12a starr mit einer Aufständereinheit verbunden entfällt das als Torsionsrohr ausgebildete Sitzbauteil 14a. Ist die Rückenlehne 12a starr ausgebildet ist die Rückenlehnenaufschlagssicherungsvorrichtung 20a mit dem Koppelelement 36a fest an einer Tragstruktur, also insbesondere an einem Teil der Aufständereinheit des Flugzeugsitzes 10a angebunden. Dabei ist insbesondere auch denkbar, dass das Koppelelement 36a fest mit dem Sitzteiler 16a verbunden ist. Grundsätzlich ist auch eine Anbindung des Koppelelements 36a an einem Lagerbock, welcher an einem Querrohr des Flugzeugsitzes 10a angebracht ist, denkbar.

Die Rückenlehnenaufschlagssicherungsvorrichtung 20a umfasst eine erste Halteeinheit 42a und eine zweite Halteeinheit 44a. Grundsätzlich ist es auch denkbar, dass die Rückenlehnenaufschlagssicherungsvorrichtung 20a lediglich eine Halteeinheit 42a, 44a oder mehr als zwei Halteeinheiten 42a, 44a aufweist. Die Halteeinheiten 42a, 44a sind zwischen den beiden Rahmenelementen 22a, 24a der Rückenlehnenaufschlagssicherungsvorrichtung 20a angeordnet. Die beiden Halteeinheiten 42a, 44a sind in dem von den beiden Rahmenelementen 22a, 24a aufgespannten Raum angeordnet. Die eine Halteeinheit 42a ist dabei an dem einen Rahmenelement 22a und die andere Halteeinheit 44a an dem gegenüberliegenden Rahmenelement 24a angeordnet. Die Halteeinheiten 42a, 44a sind fest mit den Rahmenelementen 22a, 24a verbunden. Die Halteeinheiten 42a, 44a sind mit einem ersten Ende mit den Rahmenelementen 22a, 24a verbunden. Die Halteeinheiten 42a, 44a sind über ein Verbindungselement 50a mit den Rahmenelementen 22a, 24a verbunden. Das Verbindungselement 50a ist mit beiden Rahmenelementen 22a, 24a verbunden. Das Verbindungselement 50a ist als ein Bolzen ausgebildet. Das als Bolzen ausgebildete Verbindungselement 50a ist über Aufnahmelöcher mit den Rahmenelementen 22a, 24a verbunden. Das als Bolzen ausgebildete Verbindungselement 50a ist über eine Sicherungsfeder an den Rahmenelementen 22a, 24a gesichert. Die Rückenlehnenaufschlagssicherungsvorrichtung 20a umfasst eine Abstandshülse 52a, die auf dem Verbindungselement 50a zwischen den beiden Halteeinheiten 42a, 44a angeordnet ist. Die Abstandshülse 52a beabstandet die Halteeinheiten 42a, 44a zueinander. Die beiden Halteeinheiten 42a, 44a sind identisch zueinander ausgebildet, weswegen im Folgenden lediglich eine Halteeinheit 42a, 44a näher beschrieben wird. Die Halteeinheit 42a, 44a ist dazu vorgesehen, die Rückenlehnenaufschlagssicherungsvorrichtung 20a in einem Normalbetriebszustand zu verriegeln. Die Halteeinheit 42a, 44a ist in dem Normalbetriebszustand dazu vorgesehen, die Rückenlehnenaufschlagssicherungsvorrichtung 20a durch einen Kraftschluss zu verriegeln. Die Halteeinheit 42a, 44a verriegelt die Rückenlehnenaufschlagssicherungsvorrichtung 20a dabei durch einen Reibschluss. Die Halteeinheit 42a, 44a hält in dem Normalbetriebszustand das zweite, mit dem Sitzbauteil 14a verbundene Koppelelement 36a kraftschlüssig. Die Halteeinheit 42a, 44a ist dazu vorgesehen, in einem Auslösefall zunächst elastisch verformt zu werden. In dem Auslösefall gibt die Halteeinheit 42a, 44a das zweite Koppelelement 36a frei.

Die Halteeinheit 42a, 44a ist als ein Federelement ausgebildet. Die Halteeinheit 42a, 44a ist als ein Blattfederelement ausgebildet. Die Halteeinheit 42a, 44a ist aus einem Federstahl gebildet. Die als Blattfederelement ausgebildete Halteeinheit 42a. 44 weist zwei Federschenkel 46a, 48a auf. Die Federschenkel 46a, 48a sind beabstandet zueinander angeordnet. Die Federschenkel 46a, 48a weisen einen Abstand voneinander auf, der im Wesentlichen einem Durchmesser des Koppelelements 36a entspricht. Die Federschenkel 46a, 48a sind an dem ersten Ende und an einem zweiten Ende der Halteeinheit 42a, 44a miteinander verbunden. In dem Normalbetriebszustand ist das mit dem Sitzbauteil 14a gekoppelte Koppelelement 36a zwischen den Federschenkeln 46a, 48a der Halteeinheit 42a, 44a angeordnet. Das Koppelelement 36a ist in dem Normalbetriebszustand zwischen den beiden Federschenkeln 46a, 48a der Halteeinheit 42a, 44a eingeklemmt. In dem Normalbetriebszustand ist das Koppelelement 36a kraftschlüssig mit den Federschenkeln 46a, 48a der Halteeinheit 42a, 44a gekoppelt. Die beiden Federschenkel 46a, 48a sind in einem Zustand, in dem sie mit dem Koppelelement 36a gekoppelt sind, aus ihrer neutralen Ruhestellung ausgelenkt. Die Federschenkel 46a, 48a der Halteeinheit 42a, 44a üben jeweils eine Federkraft auf das Koppelelement 36a aus. Die Federkräfte der beiden Federschenkel 46a, 48a sind einander entgegengerichtet. Durch die auf das Koppelelement 36a ausgeübte Federkraft ist das Koppelelement 36a zwischen den Federschenkeln 46a, 48a eingeklemmt. Die Federschenkel 46a, 48a weisen auf ihren Innenseiten jeweils eine Erhebung 54a, 56a auf. Die Erhebungen 54a, 56a sind in dem Haltebereich 58a angeordnet, in dem das Koppelelement 36a in dem Normalbetriebszustand angeordnet ist. Die Erhebungen 54a, 56a sichern das Koppelelement 36a in dem Normalbetriebszustand in seiner Halteposition. Durch die Erhebungen 54a, 56a ist das Koppelelement 36a im verriegelten Zustand zusätzlich zu der kraftschlüssigen Verbindung auch formschlüssig mit den Federschenkeln 46a, 48a gekoppelt. Durch die Erhebungen ist das Koppelelement 36a im verriegelten Zustand hauptsächlich durch einen Formschluss gehalten. Dadurch kann ein besonders zuverlässig verriegelter Zustand erreicht werden. In einem Auslösefall werden die Federschenkel 46a, 48a der Halteeinheit 42a, 44a durch eine Bewegung des Koppelelements 36a relativ zu der Halteeinheit 42a, 44a elastisch verformt, insbesondere nach außen gedrückt, sodass das Koppelelement 36a die Erhebungen 54a, 56a passieren kann. Dadurch kann sich das Koppelelement 36a in dem Lagerbereich 40a relativ zu den Rahmenelementen 22a, 24a und den Halteeinheiten 42a, 44a bewegen.

Die Rückenlehnenaufschlagssicherungsvorrichtung 20a umfasst eine Absorptionseinheit 60a. Die Absorptionseinheit 60a ist nach einer Entkopplung durch die elastische Verformung der Halteeinheiten 42a, 44a dazu vorgesehen, eine Bewegungsenergie der Rückenlehne 12a umzuwandeln. Die Absorptionseinheit 60a ist dazu vorgesehen, durch plastische Verformung die Bewegungsenergie der Rückenlehne 12a umzuwandeln. Die Absorptionseinheit 60a ist an einem dem Haltebereich 58a abgewandten Ende des Lagerbereichs 40a angeordnet. Die Absorptionseinheit 60a ist getrennt von den Halteeinheiten 42a, 44a ausgebildet. Die Absorptionseinheit 60a ist einstückig mit den Rahmenelementen 22a, 24a ausgebildet. Die Absorptionseinheit 60a weist Umformbereiche 66a auf. Die Umformbereiche 66a sind von den Langlöchern 68a in den Rahmenelementen 22a, 24a gebildet. Die Umformbereiche 66a weisen Erhebungen 62a, 64a an Innenseiten der Langlöcher 68a, die den Lagerbereich 40a ausbilden, auf. Die Erhebungen 62a, 64a bilden eine Verjüngung der Langlöcher 68a aus. In dem Bereich der Erhebungen 62a, 64a weisen die Langlöcher 68a eine Breite auf, die geringer ist als der Durchmesser des mit dem Sitzbauteil 14a gekoppelten Koppelelements 36a. Die Umformbereiche 66a weisen einen sich zunächst verbreiternden und sich schließlich wieder verjüngenden Verlauf auf. Das Koppelelement 36a ist dazu vorgesehen, die Umformbereiche 66a plastisch zu verformen, um eine Bewegungsenergie der Rückenlehne 12a in Umformenergie umzuwandeln. Dadurch wird die Rückenlehne 12a in einem Crashfall nach der teilweisen Entkopplung und der daraus resultierenden Schwenkbewegung wieder abgebremst.

Die Rückenlehnenaufschlagssicherungsvorrichtung 20a weist zwei Führungselemente 70a, 72a auf. Die Führungselemente 70a, 72a sind dazu vorgesehen, das mit dem Sitzbauteil 14a gekoppelte Koppelelement 36a bei einer Bewegung relativ zu den Rahmenelementen 22a, 24a zu führen. Die Führungselemente 70a, 72a sind dazu vorgesehen, das Koppelelement 36a während einer Auslösung in einem Crashfall zu führen. Durch die Führungselemente 70a, 72a wird insbesondere ein Verkanten des Koppelelements 36a bei einer Relativbewegung zu den Rahmenelementen 22a, 24a verhindert. Die Führungselemente 70a, 72a sind jeweils auf einer Außenseite der Rahmenelemente 22a, 24a angeordnet. Die Führungselemente 70a, 72a sind als dünne Platten mit jeweils einem Langloch 74a ausgebildet. Die Führungselemente 70a, 72a sind über eine formschlüssige Verbindung fest mit den Rahmenelementen 22a, 24a verbunden. Die Führungselemente 70a, 72a sind mit den Rahmenelementen 22a, 24a vernietet. Die Langlöcher 74a der Führungselemente 70a, 72a sind dabei deckungsgleich mit den Langlöchern 68a der Rahmenelemente 22a, 24a. Die Langlöcher 74a der Führungselemente 70a, 72a reichen dabei von dem Haltebereich 58a des Koppelelements 36a bis an ein hinteres Ende des Umformbereichs 66a.

Im Folgenden soll kurz eine Reaktion der Flugzeugsitzvorrichtung mit der Rückenlehnenaufschlagssicherungsvorrichtung 20a in einem Crashfall beschrieben werden. Figur 1 zeigt schematisch die Flugzeugsitzvorrichtung mit der Rückenlehnenaufschlagssicherungsvorrichtung 20a in ihrer Verriegelstellung. In einem Normalbetriebszustand ist das mit dem Sitzbauteil 14a gekoppelte Koppelelement 36a in dem Haltebereich 58a angeordnet. Die Halteeinheiten 42a, 44a halten das Koppelelement 36a dabei kraftschlüssig in dem Haltebereich 58a. In dem Normalbetriebszustand können für einen Betrieb normale Kräfte, insbesondere Handholdlasten, die auf die Rückenlehne 12a einwirken, über die Rückenlehnenaufschlagssicherungsvorrichtung 20a in das Sitzbauteil 14a weitergeleitet werden. Die Kräfte werden über das erste mit der Rückenlehne 12a verbundene Koppelelement 34a in die Rahmenelemente 22a, 24a eingeleitet. Die Kräfte werden über das Verbindungselement 50a in die Halteeinheiten 42a, 44a eingeleitet. Über die Kopplung zwischen den Halteeinheiten 42a, 44a mit dem Koppelelement 36a werden die Kräfte in das Sitzbauteil 14a abgeleitet. Die Kräfte können über die Koppelelemente 34a, 36a über die Rückenlehnenaufschlagssicherungsvorrichtung 20a zwischen der Rückenlehne 12a und dem Sitzbauteil 14a übertragen werden. Tritt nun in einem Crashfall eine Verzögerung entgegen der Flugrichtung ein, zu der die Rückenlehnenaufschlagssicherungsvorrichtung 20a parallel ausgerichtet ist, wird die Rückenlehne 12a verzögert. Dabei wird aufgrund einer Massenträgheit in dem Crashfall ein Großteil der Rückenlehne 12a in Richtung der Flugrichtung beschleunigt. Der Großteil der Rückenlehne 12a bewegt sich in dem Crashfall in Richtung der Flugrichtung. Durch die Lagerung der Rückenlehne 12a entsteht durch die Verzögerung ein Moment um die Lagerstelle der Rückenlehne 12a. Durch das Moment wird über das Koppelelement 34a eine Kraft in die Rückenlehnenaufschlagssicherungsvorrichtung 20a eingeleitet, die entgegen der Flugrichtung ausgerichtet ist. Überschreitet die über das Koppelelement 34a in die Rückenlehnenaufschlagssicherungsvorrichtung 20a eingeleitete Kraft einen Grenzwert und ist sie dadurch insbesondere größer als eine Haltekraft, die von den Halteeinheiten 42a, 44a auf das Koppelelement 36a ausgeübt wird, verformt das Koppelelement 34a die Halteeinheiten 42a, 44a elastisch und drückt diese insbesondere auseinander. Durch die elastische Verformung der Halteeinheiten 42a, 44a gibt die Rückenlehnenaufschlagssicherungsvorrichtung 20a eine Bewegung des Koppelelements 36a relativ zu den Rahmenelementen 22a, 24a und dadurch eine Relativbewegung der Rückenlehne 12a zu dem Sitzbauteil 14a frei. Das mit dem Sitzbauteil 14a gekoppelte Koppelelement 36a wird relativ zu den Rahmenelementen 22a, 24a der Rückenlehnenaufschlagssicherungsvorrichtung 20a bewegt. Aufgrund der Massenträgheit sowie aufgrund der schwenkbaren Lagerung der Rückenlehne 12a um die Lagerstelle bewegt sich ein unterer Bereich der Rückenlehne 12a entgegen der Flugrichtung. Die Rückenlehne 12a wird durch die Verzögerung mit ihrem oberen Ende nach vorne geschwenkt. Die Verschwenkung der Rückenlehne 12a erfolgt dabei vor einem Auftreffen eines Kopfs eines hinter dem Flugzeugsitz 10a sitzenden Passagiers auf der Rückenlehne 12a. Die Rahmenelemente 22a, 24a werden durch die Kopplung mit der Rückenlehne 12a zusammen mit den Halteeinheiten 42a, 44a und den Führungselementen 70a, 72a entgegen der Flugrichtung bewegt. Das mit dem Sitzbauteil 14a gekoppelte Koppelelement 36a gleitet nach der elastischen Verformung der Halteeinheiten 42a, 44a in den Langlöchern 68a der Rahmenelemente 22a, 24a in Richtung des hinteren Endes der Rahmenelemente 22a, 24a. Am Ende des Lagerbereichs 40a stößt das Koppelelement 36a an die Erhebungen 62a, 64a des Umformbereichs 66a der Absorptionseinheit 60a. Das Koppelelement 36a deformiert den Umformbereich 66a plastisch. Dadurch wird eine Bewegungsenergie der Rückenlehne 12a in Verformungsenergie umgewandelt. Durch die plastische Verformung der Absorptionseinheit 60a wird eine Relativbewegung des Koppelelements 36a zu den Rahmenelementen 22a, 24a und dadurch auch die Relativbewegung der Rückenlehne 12a zu dem Sitzbauteil verzögert. Eine Rotation der Rückenlehne 12a wird abgebremst. Durch die Rotation der Rückenlehne 12a steht diese nicht mehr aufrecht wie in der Sitzposition und ein Auftreffbereich 108a, in dem ein Kopf eines hinter dem Flugzeugsitz 10a sitzenden Passagiers auf der Rückenlehne 12a auftrifft, ist um 3 cm nach unten versetzt, im Gegensatz zu einem Auftreffbereich einer nicht nach vorne geschwenkten Rückenlehne 12a. Trifft ein Kopf des Passagiers auf der Rückenlehne 12a auf, wird die Bewegungsenergie, die der Aufprall des Kopfs in die Rückenlehne 12a einleitet, durch die Absorptionseinheit 60a in Verformungsenergie umgewandelt. Dadurch kann ein Auftreffen eines Kopfs eines Passagiers auf der Rückenlehne 12a vorteilhaft gedämpft werden und so können insbesondere Verletzungen verringert werden.

Die Rückenlehnenaufschlagssicherungsvorrichtung 20a ist dazu vorgesehen, nach der teilweisen Entkopplung wieder in eine Verriegelstellung gebracht zu werden. Durch das Rückführen der Rückenlehnenaufschlagssicherungsvorrichtung 20a nach der teilweisen Entkopplung kann die Rückenlehne 12a nach einer Verstellung während des Crashfalls wieder arretiert werden und ein Fluchtweg für einen Passagier vorteilhaft frei gehalten werden. Die Rückenlehne 12a ist nach dem Crashfall mit ihrem oberen Bereich nach vorne in Flugrichtung geschwenkt. Wird die Rückenlehne 12a wieder nach hinten geschwenkt, werden die Halteeinheiten 42a, 44a zusammen mit den Rahmenelementen 22a, 24a relativ zu dem Koppelelement 36a verschoben, das zurück in seinen Haltebereich 58a gebracht wird. Dabei lenkt das Koppelelement 36a die Federschenkel 46a, 48a der Halteeinheiten 42a, 44a elastisch nach außen aus, wodurch diese Federschenkel 46a, 48a eine Haltekraft auf das Koppelelement 36a ausüben. Das Koppelelement 36a überdrückt dabei die Erhebungen 54a, 56a. Die Halteeinheiten 42a, 44a sichern das Koppelelement 36a und halten dadurch die Rückenlehne 12a wieder in einer im Wesentlichen aufrechten Ausgangsstellung.

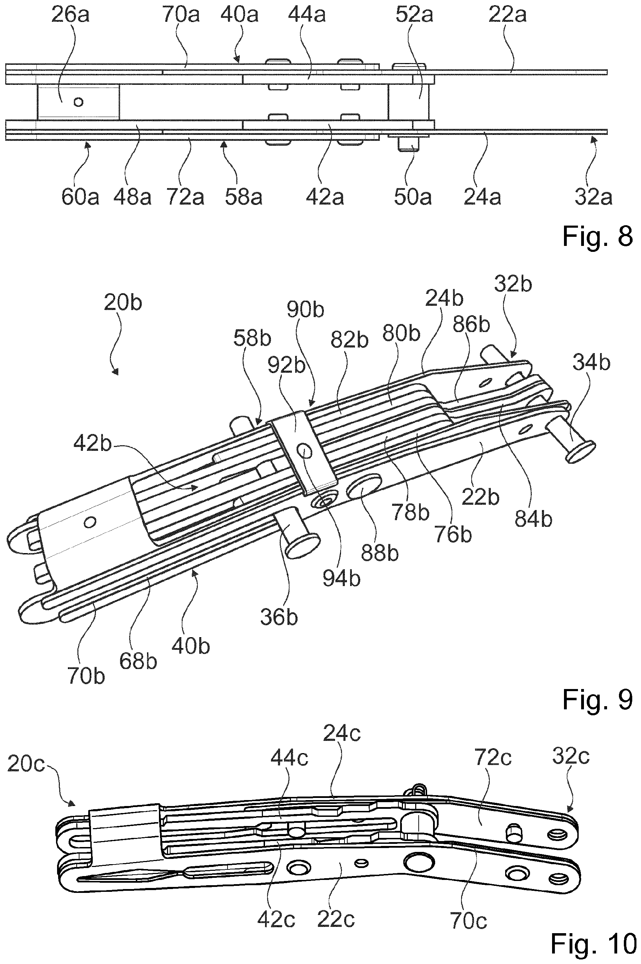

In den Figuren 9 und 10 sind zwei weitere Ausführungsbeispiele der Erfindung gezeigt. Die nachfolgende Beschreibung und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 8, verwiesen werden kann. Zur Unterscheidung der Ausführungsbeispiele ist der Buchstabe a den Bezugszeichen des Ausführungsbeispiels in Fig. 1 bis 8 nachgestellt. In den Ausführungsbeispielen der Figuren 9 und 10 ist der Buchstabe a durch die Buchstaben b und c ersetzt.

Die Figur 9 zeigt eine erfindungsgemäße Flugzeugsitzvorrichtung in einem zweiten Ausführungsbeispiel. Die Flugzeugsitzvorrichtung ist dabei Teil eines nicht näher dargestellten Flugzeugsitzes. Die Flugzeugsitzvorrichtung umfasst eine Rückenlehne. Die Flugzeugsitzvorrichtung umfasst weiter ein Sitzbauteil. Das Sitzbauteil ist als eine Querversteifungseinheit ausgebildet, die dazu vorgesehen ist, die Rückenlehne in der Querversteifungseinheitenquerrichtung zu versteifen.

Die Flugzeugsitzvorrichtung umfasst eine Rückenlehnenaufschlagssicherungsvorrichtung 20b. Die Rückenlehnenaufschlagssicherungsvorrichtung 20b ist zumindest in einem Normalbetriebszustand dazu vorgesehen, die Rückenlehne und das Sitzbauteil in einer Verriegelstellung starr zu verbinden. In dem Normalbetriebszustand, der einen normalen und ordnungsgemäßen Gebrauch des Flugzeugsitzes abbildet, können Kräfte über die Rückenlehnenaufschlagssicherungsvorrichtung 20b von der Rückenlehne in das Sitzbauteil übertragen werden. Die Rückenlehnenaufschlagssicherungsvorrichtung 20b ist dazu vorgesehen, die Rückenlehne in zumindest einem Betriebszustand von dem Sitzbauteil teilweise zu entkoppeln. Durch die teilweise Entkopplung der Rückenlehne von dem Sitzbauteil können in einem Crashfall die Rückenlehne und das Sitzbauteil eine Relativbewegung zueinander ausüben, um so eine Verletzungsgefahr für einen hinter dem Flugzeugsitz sitzenden Passagier zu reduzieren.

Die Rückenlehnenaufschlagssicherungsvorrichtung 20b umfasst ein erstes Rahmenelement 22b und ein zweites Rahmenelement 24b. Die beiden Rahmenelemente 22b, 24b sind jeweils als dünne Platten ausgebildet. Die Rahmenelemente 22b, 24b sind als Flachstäbe ausgebildet. Die Rahmenelemente 22b, 24b sind im Wesentlichen identisch ausgebildet. Die Rahmenelemente 22b, 24b sind beabstandet zueinander angeordnet. An einem ersten hinteren Ende weisen die Rahmenelemente 22b, 24b eine Lagerstelle 32b auf. Die Lagerstelle 32b ist von zwei koaxial angeordneten in die Rahmenelemente 22b, 24b eingebrachten Durchgangslöchern ausgebildet. Die Rückenlehnenaufschlagssicherungsvorrichtung 20b weist ein Koppelelement 34b auf, das zur festen Kopplung zwischen der Rückenlehnenaufschlagssicherungsvorrichtung 20b und der Rückenlehne vorgesehen ist. Das Koppelelement 34b ist als ein Bolzen ausgebildet. Über das als Bolzen ausgebildete Koppelelement 34b sind die Rückenlehne und die Rückenlehnenaufschlagssicherungsvorrichtung 20b fest miteinander gekoppelt. Die Rückenlehnenaufschlagssicherungsvorrichtung 20b umfasst ein zweites Koppelelement 36b, das zur festen Kopplung der Rückenlehnenaufschlagssicherungsvorrichtung 20b mit dem Sitzbauteil vorgesehen ist. Das zweite Koppelelement 36b ist als ein Bozen ausgebildet. Das zweite Koppelelement 36b ist über ein Hebelelement mit dem als Torsionsrohr ausgebildeten Sitzbauteil verbunden. Die Rahmenelemente 22b, 24b der Rückenlehnenaufschlagssicherungsvorrichtung 20b weisen einen Lagerbereich 40b auf, der von Langlöchern 68b gebildet ist. Die Langlöcher 68b reichen von einem Haltebereich 58b des Koppelelements 36b bis an ein zweites Ende der Rahmenelemente 22b, 24b. Die Langlöcher 68b bilden im Unterschied zu dem ersten Ausführungsbeispiel auch Führungselemente 70b aus, die dazu vorgesehen sind, das Koppelelement 36b bei einer Relativbewegung zu den Rahmenelementen 22b, 24b zu führen.

Die Rückenlehnenaufschlagssicherungsvorrichtung 20b umfasst eine Halteeinheit 42b. Die Halteeinheit 42b ist als ein Federpaket ausgebildet. Die als Federpaket ausgebildete Halteeinheit 42b umfasst vier als Blattfedern ausgebildete Federelemente 76b, 78b, 80b, 82b. Die Federelemente 76b, 78b, 80b, 82b der Halteeinheit 42b weisen jeweils zwei Federschenkel auf. Die Federelemente 76b, 78b, 80b, 82b sind zwischen den Rahmenelementen 22b, 24b angeordnet. Die beiden äußeren Federelemente 76b, 82b sind kürzer ausgebildet als die mittleren Federelemente 78b, 80b. Die Federschenkel der äußeren Federelemente 76b, 82b ragen bis kurz über den Haltebereich 58b des Koppelelements 36b hinaus. Die Federschenkel der mittleren Federelemente 78b, 80b ragen bis an das hintere Ende der Rahmenelemente 22b, 24b. Die Halteeinheit 42b ist mit dem ersten Koppelelement 34b verbunden. Die Rückenlehnenaufschlagssicherungsvorrichtung 20b umfasst zwei Verbindungselemente 84b, 86b, die zwischen den dem einen Rahmenelement 22b zugewandten Federelementen 76b, 78b und den dem anderen Rahmenelement 24b zugewandten Federelementen 80b, 82b angeordnet sind. Die Verbindungselemente 84b, 86b sind über Aufnahmen an einem ersten Ende formschlüssig mit dem Koppelelement 34b verbunden. An einem zweiten Ende sind die Verbindungselemente 84b, 86b über einen Bolzen 88b mit den Federelementen 76b, 78b, 80b, 82b und den Rahmenelementen 22b, 24b verbunden. Die Halteeinheit 42b ist dazu vorgesehen, die Rückenlehnenaufschlagssicherungsvorrichtung 20b in einem Normalbetriebszustand zu verriegeln. Die Halteeinheit 42b ist in dem Normalbetriebszustand dazu vorgesehen, die Rückenlehnenaufschlagssicherungsvorrichtung 20b durch einen Kraftschluss zu verriegeln. Die Halteeinheit 42b ist dazu vorgesehen, in einem Auslösefall zunächst elastisch verformt zu werden. In dem Auslösefall gibt die Halteeinheit 42b das zweite Koppelelement 36b frei. Die als Blattfedern ausgebildeten Federelemente 76b, 78b, 80b, 82b halten das Koppelelement 36b in einem Verriegelzustand über einen Reibschluss zwischen ihren Federschenkeln in dem Haltebereich 58b. In dem Auslösefall werden die Federschenkel der Federelemente 76b, 78b, 80b, 82b elastisch ausgelenkt und geben das Koppelelement 36b frei.

Die Rückenlehnenaufschlagssicherungsvorrichtung 20b umfasst eine Absorptionseinheit 60b. Die Absorptionseinheit 60b ist nach einer Entkopplung durch die elastische Verformung der Halteeinheiten 42b dazu vorgesehen, eine Bewegungsenergie der Rückenlehne umzuwandeln. Die Absorptionseinheit 60b ist im Unterschied zu dem ersten Ausführungsbeispiel als ein separates Bauteil ausgebildet. Die Absorptionseinheit 60b ist getrennt von der Halteeinheit 42b und den Rahmenelementen 22b, 24b ausgebildet. Die Absorptionseinheit 60b ist von einem Blechbiegeteil gebildet. Die Absorptionseinheit 60b ist über den Bolzen 88b und eine Nietverbindung 96b mit den Rahmenelementen 22b, 24b gekoppelt. Die Absorptionseinheit 60b weist Umformbereiche 66b auf. Die Umformbereiche 66b sind dabei identisch zu den im ersten Ausführungsbeispiel beschriebenen Umformbereichen ausgebildet und sollen deshalb hier nicht näher beschrieben werden.

Die Rückenlehnenaufschlagssicherungsvorrichtung 20b weist ein Einstellelement 90b auf, das durch Verstellung dazu vorgesehen ist, eine Haltekraft der Halteeinheit 42b zu verändern. Dadurch kann eine auf die Rückenlehne wirkende Beschleunigung, die zum Auslösen der Rückenlehnenaufschlagssicherungsvorrichtung 20b nötig ist, einfach eingestellt werden. Das Einstellelement 90b ist zur Veränderung der Haltekraft dazu vorgesehen, eine Länge eines zur Entkopplung elastisch verformbaren Bereichs der Halteeinheit 42b zu verändern. Das Einstellelement 90b ist dazu vorgesehen, eine Länge der Federschenkel der Federelemente 76b, 78b, 80b, 82b, die elastisch ausgelenkt werden kann, zu variieren. Das Einstellelement 90b ist von zwei Metallplatten 92b gebildet, die von einer Oberseite und von einer Unterseite auf die Federschenkel der Federelemente 76b, 78b, 80b, 82b drücken. Die Metallplatten 92b sind durch ein Verbindungselement 94b miteinander verbunden. Das Verbindungselement 94b ist als ein Schraubenelement ausgebildet. Die Metallplatten 92b des Einstellelements 90b üben eine Klemmkraft auf die Federschenkel der Federelemente 76b, 78b, 80b, 82b aus. Durch eine axiale Verschiebung des Einstellelements 90b entlang der Federschenkel der Federelemente 76b, 78b, 80b, 82b kann eine Kraft, die nötig ist, um die Federschenkel der Federelemente 76b, 78b, 80b, 82b elastisch zu verformen, variiert werden. So kann die Rückenlehnenaufschlagssicherungsvorrichtung 20b einfach an unterschiedliche Flugzeugsitze und insbesondere an unterschiedlich schwere Rückenlehnen angepasst werden. Dadurch kann die Rückenlehnenaufschlagssicherungsvorrichtung 20b vorteilhaft einfach für verschiedene Flugzeugsitze ausgelegt werden. Eine Funktionsweise der Rückenlehnenaufschlagssicherungsvorrichtung 20b ist identisch zu der des ersten Ausführungsbeispiels und soll hier deshalb nicht näher erläutert werden.

Die Figur 10 zeigt eine erfindungsgemäße Flugzeugsitzvorrichtung in einem dritten Ausführungsbeispiel. Die Flugzeugsitzvorrichtung ist dabei Teil eines nicht näher dargestellten Flugzeugsitzes. Die Flugzeugsitzvorrichtung umfasst eine Rückenlehne. Die Flugzeugsitzvorrichtung umfasst weiter ein Sitzbauteil. Das Sitzbauteil ist als eine Querversteifungseinheit ausgebildet, die dazu vorgesehen ist, die Rückenlehne in der Querversteifungseinheitenquerrichtung zu versteifen.

Die Flugzeugsitzvorrichtung umfasst eine Rückenlehnenaufschlagssicherungsvorrichtung 20c. Die Rückenlehnenaufschlagssicherungsvorrichtung 20c ist zumindest in einem Normalbetriebszustand dazu vorgesehen, die Rückenlehne und das Sitzbauteil in einer Verriegelstellung starr zu verbinden. In dem Normalbetriebszustand, der einen normalen und ordnungsgemäßen Gebrauch des Flugzeugsitzes abbildet, können Kräfte über die Rückenlehnenaufschlagssicherungsvorrichtung 20c von der Rückenlehne in das Sitzbauteil übertragen werden. Die Rückenlehnenaufschlagssicherungsvorrichtung 20c ist dazu vorgesehen, die Rückenlehne in zumindest einem Betriebszustand von dem Sitzbauteil teilweise zu entkoppeln.

Die Rückenlehnenaufschlagssicherungsvorrichtung 20c ist im Wesentlichen gleich Ausgebildet wie die Rückenlehnenaufschlagssicherungsvorrichtung des ersten Ausführungsbeispiels aus den Figuren 2 bis 8. Die Rückenlehnenaufschlagssicherungsvorrichtung 20c umfasst ein erstes Rahmenelement 22c und ein zweites Rahmenelement 24c. An dem ersten hinteren Ende weisen die Rahmenelemente 22c, 24c eine Lagerstelle 32c auf. Die Rahmenelemente 22c, 24c sind im Wesentlichen gleich ausgebildet wie die Rahmenelemente des ersten Ausführungsbeispiels. Die Rückenlehnenaufschlagssicherungsvorrichtung 20c umfasst eine erste Halteeinheit 42c und eine zweite Halteeinheit 44c. Die Halteeinheiten 42c, 44c sind im Wesentlichen gleich ausgebildet wie die Halteeinheiten des ersten Ausführungsbeispiels. Die Rückenlehnenaufschlagssicherungsvorrichtung 20c weist zwei Führungselemente 70c, 72c auf. Die Führungselemente 70c, 72c sind dazu vorgesehen, ein mit einem Sitzbauteil gekoppelte Koppelelement bei einer Bewegung relativ zu den Rahmenelementen 22c, 24c zu führen. Im Unterschied zu dem ersten Ausführungsbeispiel sind die Führungselemente 70c, 72c jeweils auf einer Innenseite eines Rahmenelements 22c, 24c angeordnet. Die Führungselemente 70c, 72c sind jeweils zwischen einem Rahmenelement 22c, 24c und einer Halteeinheit 42c. 44c angeordnet. Im Unterschied zu dem ersten Ausführungsbeispiel erstrecken sich die Führungselemente 70c, 72c von einem vorderen Ende der Rückenlehnenaufschlagssicherungsvorrichtung 20c bis zu der Lagerstelle 32c, die die Rahmenelemente 22c, 24c ausbilden.

### Bezugszeichen

- 10: Flugzeugsitz
- 12: Rückenlehne
- 14: Sitzbauteil
- 16: Sitzteiler
- 18: Sitzboden
- 20: Rückenlehnenaufschlagssicherungsvorrichtung
- 22: Rahmenelement
- 24: Rahmenelement
- 26: Brückenelement
- 28: kurzer Teilbereich
- 30: langer Teilbereich
- 32: Lagerstelle
- 34: Koppelelement
- 36: Koppelelement
- 38: Hebelelement
- 40: Lagerbereich
- 42: Halteeinheit
- 44: Halteeinheit
- 46: Federschenkel
- 48: Federschenkel
- 50: Verbindungselement
- 52: Abstandshülse
- 54: Erhebung
- 56: Erhebung
- 58: Haltebereich
- 60: Absorptionseinheit
- 62: Erhebung
- 64: Erhebung
- 66: Umformbereich
- 68: Langloch
- 70: Führungselement
- 72: Führungselement
- 74: Langloch
- 76: Federelement
- 78: Federelement
- 80: Federelement
- 82: Federelement
- 84: Verbindungselement
- 86: Verbindungselement
- 88: Bolzen
- 90: Einstellelement
- 92: Metallplatte
- 94: Verbindungselement
- 96: Nietverbindung
- 100: Flugzeugsitz
- 102: Flugzeugsitz
- 104: Testrichtung
- 106: Crashtestdummy
- 108: Auftreffbereich
- 110: Rückenlehne

## Patentansprüche

1. Flugzeugsitzvorrichtung mit zumindest einer Rückenlehne (12a), mit zumindest einem mit der Rückenlehne (12a) gekoppelten Sitzbauteil (14a) und mit einer Rückenlehnenaufschlagssicherungsvorrichtung (20a; 20b), die durch eine teilweise Entkopplung der Rückenlehne (12a) von dem Sitzbauteil (14a) dazu vorgesehen ist, Aufschlagskräfte auf die Rückenlehne (12a) zumindest in einem Crashfall zumindest teilweise zu reduzieren, und die dazu wenigstens eine Halteeinheit (42a, 44a; 42b) umfasst, die die Rückenlehnenaufschlagssicherungsvorrichtung (20a; 20b) in einem Normalbetriebszustand verriegelt, **dadurch gekennzeichnet, dass** die Halteeinheit (42a, 44a) als ein Blattfederelement ausgebildet ist, das wenigstens einen Federschenkel (46a, 48a) aufweist, wobei die Halteeinheit (42a, 44a; 42b) in einem Auslösefall zur Entkopplung zunächst dazu vorgesehen ist, elastisch verformt zu werden.

2. Flugzeugsitzvorrichtung nach Anspruch 1, **dadurch gekennzeichnet, dass** die Halteeinheit (42a, 44a; 42b) dazu vorgesehen ist, die Rückenlehnenaufschlagssicherungsvorrichtung (20a; 20b) in dem Normalbetriebszustand zumindest im Wesentlichen durch einen Kraftschluss zu verriegeln.

3. Flugzeugsitzvorrichtung nach einem der vorhergehenden Ansprüche, **dadurch gekennzeichnet, dass** die Rückenlehnenaufschlagssicherungsvorrichtung (20a; 20b) zumindest eine Absorptionseinheit (60a; 60b) aufweist, die nach einer Entkopplung durch die elastische Verformung der wenigstens einen Halteeinheit (42a, 44a; 42b) dazu vorgesehen ist, zumindest eine Bewegungsenergie der Rückenlehne (12a) umzuwandeln.

4. Flugzeugsitzvorrichtung nach einem der vorhergehenden Ansprüche, **dadurch gekennzeichnet, dass** die Absorptionseinheit (60a; 60b) dazu vorgesehen ist, durch plastische Verformung die Bewegungsenergie der Rückenlehne (12a) umzuwandeln.

5. Flugzeugsitzvorrichtung nach Anspruch 3 oder 4, **dadurch gekennzeichnet, dass** die Absorptionseinheit (60a; 60b) zumindest teilweise getrennt von der Halteeinheit (42a, 44a; 42b) ausgebildet ist.

6. Flugzeugsitzvorrichtung nach einem der vorhergehenden Ansprüche, **dadurch gekennzeichnet, dass** die Rückenlehnenaufschlagssicherungsvorrichtung (20a; 20b) wenigstens ein Koppelelement (36a; 36b) aufweist, das mit dem Sitzbauteil (14a) fest gekoppelt und in dem Normalbetriebszustand dazu vorgesehen ist, von der Halteeinheit (42a, 44a; 42b) gehalten zu werden.

7. Flugzeugsitzvorrichtung nach einem der vorhergehenden Ansprüche, **dadurch gekennzeichnet, dass** die Rückenlehnenaufschlagssicherungsvorrichtung (20a; 20b) wenigstens ein Koppelelement (34a; 34b) aufweist, das mit der Rückenlehne (12a) und mit der Halteeinheit (42a, 44a; 42b) fest gekoppelt ist.

8. Flugzeugsitzvorrichtung nach einem der vorhergehenden Ansprüche, **dadurch gekennzeichnet, dass** die Rückenlehnenaufschlagssicherungsvorrichtung (20a; 20b) zwei beabstandet zueinander angeordnete Rahmenelemente (22a, 24a; 22b, 24b) aufweist, die zumindest mit einem mit der Rückenlehne (12a) fest gekoppelten Koppelelement (34a; 34b) verbunden sind.

9. Flugzeugsitzvorrichtung nach einem der vorhergehenden Ansprüche, **dadurch gekennzeichnet, dass** die Rückenlehnenaufschlagssicherungsvorrichtung (20b) wenigstens ein Einstellelement (90b) aufweist, das durch Verstellung dazu vorgesehen ist, eine Haltekraft der Halteeinheit (42b) zu verändern.

10. Flugzeugsitzvorrichtung nach Anspruch 9, **dadurch gekennzeichnet, dass** das Einstellelement (90b) zur Veränderung der Haltekraft dazu vorgesehen ist, eine Länge eines zur Entkopplung elastisch verformbaren Bereichs des Halteelements (42b) zu verändern.

11. Flugzeugsitzvorrichtung nach einem der vorhergehenden Ansprüche, **dadurch gekennzeichnet, dass** die Rückenlehnenaufschlagssicherungsvorrichtung (20a; 20b) dazu vorgesehen ist, einen Auftreffbereich eines Kopfs auf der Rückenlehne (12a; 12b) nach unten zu versetzen.

## Claims

1. Airplane seat device with at least one backrest (12a),
with at least one seat component (14a) that is coupled with the backrest (12a)
and with a backrest impact safety device (20a; 20b)
configured, via partial decoupling of the backrest (12a) from the seat component (14a), to at least partially reduce impact forces on the backrest (12a) at least in a crash case,
and for this purpose comprising at least one holding unit (42a, 44a; 42b) which locks the backrest impact safety device (20a; 20b) in a normal operation state,
**characterised in that** the holding unit (42a, 44a) is realized as a leaf spring element having at least one spring leg (46a, 48a), wherein in a trigger case, for decoupling, the holding unit (42a, 44a; 42b) is configured firstly to be deformed elastically.

2. Airplane seat device according to claim 1,
**characterised in that** the holding unit 42a, 44a; 42b) is configured, in the normal operation state, to lock the backrest impact safety device (20a; 20b) at least substantially via a force-fit connection.

3. Airplane seat device according to one of the preceding claims, **characterised in that** the backrest impact safety device (20a; 20b) comprises at least one absorption unit (60a; 60b) which is configured, following a decoupling by the elastic deformation of the at least one holding unit (42a, 44a; 42b), to convert at least a kinetic energy of the backrest (12a).

4. Airplane seat device according to one of the preceding claims, **characterised in that** the absorption unit (60a; 60b) is configured to convert the kinetic energy of the backrest (12a) by plastic deformation.

5. Airplane seat device according to claim 3 or 4,
**characterised in that** the absorption unit (60a; 60b) is realized at least partially separately from the holding unit (42a, 44a; 42b).

6. Airplane seat device according to one of the preceding claims, **characterised in that** the backrest impact safety device (20a; 20b) comprises at least one coupling element (36a; 36b) which is fixedly coupled with the seat component (14a) and is in the normal operation state configured to be held by the holding unit (42a, 44a; 42b).

7. Airplane seat device according to one of the preceding claims, **characterised in that** the backrest impact safety device (20a; 20b) comprises at least one coupling element (34a; 34b) which is fixedly coupled with the backrest (12a) and with the holding unit (42a, 44a; 42b).

8. Airplane seat device according to one of the preceding claims, **characterised in that** the backrest impact safety device (20a; 20b) comprises two frame elements (22a, 24a; 22b, 24b), which are connected at least to a coupling element (34a; 34b) that is fixedly coupled with the backrest (12a).

9. Airplane seat device according to one of the preceding claims, **characterised in that** the backrest impact safety device (20b) comprises at least one adjusting element (90b), which is configured to modify a holding force of the holding unit (42b) via adjustment.

10. Airplane seat device according to claim 9,
**characterised in that** for a modification of the holding force the adjusting element (90b) is configured to change a length of a region of the holding element (42b) that is elastically deformable for a decoupling.

11. Airplane seat device according to one of the preceding claims, **characterised in that** the backrest impact safety device (20a; 20b) is configured to move an impact zone of a head on the backrest (12a; 12b) downwards.

## Revendications

1. Dispositif de siège d'avion avec au moins un dossier (12a),
avec au moins un composant structurel de siège (14a) couplé avec le dossier (12a)
et avec un dispositif sauvegarde-choc de dossier (20a ; 20b)
qui est prévu à au moins partiellement réduire, au moins en cas de crash, des forces d'impact sur le dossier (12a) par le biais d'un découplage partiel du dossier (12a) du composant structurel de siège (14a)
et qui comprend à cette fin au moins une unité de retenue (42a, 44a ; 42b) verrouillant le dispositif sauvegarde-choc de dossier (20a ; 20b) dans un état opératif normal,
**caractérisé en ce que** l'unité de retenue (42a, 44a) est réalisée comme élément de ressort de lame comprenant au moins une cuisse de ressort (46a, 48a), où l'unité de retenue (42a, 44a ; 42b) est prévue à être élastiquement déformée en cas de déclenchement.

2. Dispositif de siège d'avion selon la revendication 1,
**caractérisé en ce que** l'unité de retenue (42a, 44a ; 42b) est prévue, dans l'état opératif normal, à verrouiller le dispositif sauvegarde-choc de dossier (20a ; 20b) au moins sensiblement par une liaison en force.

3. Dispositif de siège d'avion selon l'une des revendications précédentes, **caractérisé en ce que** le dispositif sauvegarde-choc de dossier (20a ; 20b) comporte au moins une unité d'absorption (60a ; 60b) qui est prévue, suivant un découplage par la déformation élastique de l'au moins une unité de retenue (42a, 44a ; 42b), à convertir au moins une énergie kinétique du dossier (12a).

4. Dispositif de siège d'avion selon l'une des revendications précédentes, **caractérisé en ce que** l'unité d'absorption (60a ; 60b) est prévue à convertir l'énergie kinétique du dossier (12a) par déformation plastique.

5. Dispositif de siège d'avion selon l'une des revendications 3 ou 4, **caractérisé en ce que** l'unité d'absorption (60a ; 60b) est réalisée au moins partiellement séparément de l'unité de retenue (42a, 44a ; 42b).

6. Dispositif de siège d'avion selon l'une des revendications précédentes, **caractérisé en ce que** le dispositif sauvegarde-choc de dossier (20a ; 20b) comporte au moins un élément à couplage (36a ; 36b) qui est fixement couplé avec le composant structurel de siège (14a) et est prévu, dans l'état opératif normal, à être retenu par l'unité de retenue (42a, 44a ; 42b).

7. Dispositif de siège d'avion selon l'une des revendications précédentes, **caractérisé en ce que** le dispositif sauvegarde-choc de dossier (20a ; 20b) comporte au moins un élément à couplage (34a ; 34b) qui est fixement couplé avec le dossier (12a) et avec l'unité de retenue (42a, 44a ; 42b).

8. Dispositif de siège d'avion selon l'une des revendications précédentes, **caractérisé en ce que** le dispositif sauvegarde-choc de dossier (20a ; 20b) comporte deux éléments de cadre (22a, 24a ; 22b, 24b) disposés à l'écart l'un de l'autre et raccordés au moins à un élément à couplage (34a ; 34b) qui est fixement couplé avec le dossier (12a).

9. Dispositif de siège d'avion selon l'une des revendications précédentes, **caractérisé en ce que** le dispositif sauvegarde-choc de dossier (20b) comporte au moins un élément d'ajustement (90b) qui est prévu à modifier une force de retenue de l'unité de retenue (42b) par ajustement.

10. Dispositif de siège d'avion selon la revendication 9,
**caractérisé en ce que** pour la modification de la force de retenue l'élément d'ajustement (90b) est prévu à modifier une longueur d'une zone de l'élément de retenue (42b) qui est élastiquement déformable pour le découplage.

11. Dispositif de siège d'avion selon l'une des revendications précédentes, **caractérisé en ce que** le dispositif sauvegarde-choc de dossier (20a ; 20b) est prévu à déplacer une zone d'impact-tête sur le dossier (12a ; 12b) vers le bas.
